# EUROPEAN PATENT SPECIFICATION

(11) **EP 3 822 829 B1**
(45) Date of publication and mention of the grant of the patent: **30.09.2026**
(21) Application number: 18927857.5
(22) Date of filing: 27.07.2018
(51) Int. Cl.: G06F 40/58, H04L 51/06, H04L 51/066

(54) **MAIL TRANSLATION METHOD, ELECTRONIC DEVICE, COMPUTER STORAGE MEDIUM AND COMPUTER PROGRAM PRODUCT**
E-MAIL-ÜBERSETZUNGSVERFAHREN, ELEKTRONISCHE VORRICHTUNG, COMPUTER-SPEICHERMEDIUM UND COMPUTER-PROGRAMMPRODUKT
PROCÉDÉ DE TRADUCTION DE COURRIER, DISPOSITIF ÉLECTRONIQUE, SUPPORT DE STOCKAGE INFORMATIQUE ET PRODUIT PROGRAMME INFORMATIQUE

(43) Date of publication of application: 19.05.2021
(73) Proprietor: HUAWEI TECHNOLOGIES CO., LTD., Shenzhen, Guangdong 518129 (CN)
(72) Inventor: LI, Chenshu, Shenzhen, Guangdong 518129 (CN); LI, Yu, Shenzhen, Guangdong 518129 (CN); WANG, Quanquan, Shenzhen, Guangdong 518129 (CN)
(74) Representative: Pfenning, Meinig & Partner mbB
(86) International application number: PCT/CN2018/097613
(87) International publication number: WO 2020/019330

(56) References cited:
- CN-A- 1 397 042
- CN-A- 101 322 097
- CN-A- 102 214 167
- CN-A- 107 577 676
- US-A1- 2009 313 005
- US-A1- 2011 282 645
- US-A1- 2016 191 448

## Description

### TECHNICAL FIELD

This application relates to the field of terminal technologies, and in particular, to an email translation method, an electronic device, a computer storage medium and a computer program product.

### BACKGROUND

As functions of electronic devices become more powerful, an increasing quantity of users use applications installed on electronic devices, such as mobile phones or tablet computers, for mobile officing. As an application for mobile officing, email can be used to provide information exchange services for users.

However, in the prior art, when a sender needs to translate email content written in an email writing area, the sender needs to select to-be-translated content, enable translation software to translate the to-be-translated content, select a translation result, and copy the translation result into the email writing area. This operation manner for copying the translation result into the email writing area is relatively complex.
United States patent application US 2016/191448 A1 discloses systems and methods for providing translations of electronic messages via a social networking system. For example, systems and methods involve determining whether to provide an electronic message or a translation of the electronic message to a recipient based on social networking activities of the recipient. Furthermore, systems and methods can provide a translation of an electronic message based on an analysis of social networking activities of one or more recipients of the electronic message.
United States patent application US 2009/313005 A1 discloses a method for translating electronic text. The method includes: receiving electronic text in a first language from an originating sender; displaying the electronic text in the first language; translating the electronic text from the first language into a first translation in a second language; displaying the first translation; translating the first translation back into the first language to form a double translation; displaying the double translation; sending the first translation to one or more recipients upon a determination by the originating sender that the double translation is acceptable; and upon a determination by the originating sender that the double translation is unacceptable, receiving the electronic text in the first language modified by the originating sender, and generating a new first and double translation in response to the modifications.

### SUMMARY

Embodiments of this application provide an email translation method, an electronic device, a computer storage medium and a computer program product, to simplify an operation manner for copying a translation result into an email writing area. The invention is defined by the appended claims.

According to a first aspect, an embodiment of this application provides an email translation method, including:
displaying a first user interface, where the first user interface includes an email writing area, and the email writing area includes content written by a user; in response to a translation operation of the user on the written content, adding a first email translation area to the first user interface, where the first email translation area includes a first result preview area and a function bar, the first result preview area includes a translation result of the content written by the user, and the function bar includes a replacement button; and in response to an operation of the user on the replacement button, replacing the content written by the user included in the email writing area with the translation result, and displaying the translation result.

In this embodiment of this application, the content written by the user included in the email writing area can be replaced with the translation result by operating the replacement button. This simplifies an operation manner and improves operation efficiency.

It should be noted that the operation on the replacement button may be a tapping operation on the replacement button, a touch and hold operation on the replacement button, a hard press operation on the replacement button, or the like. This is not limited in this embodiment of this application. In a possible implementation, in response to the operation of the user on the replacement button, a first prompt box is popped up, where the first prompt box includes first prompt information and a first approval button, and the first prompt information is used to prompt the user to determine whether to agree to replace the content written by the user with the translation result; and in response to an operation on the first approval button, the content written by the user included in the email writing area is replaced with the translation result. The technical solution is conducive to reducing a possibility of misoperations performed by the user.

In a possible implementation, the first email translation area further includes a setting bar, and the setting bar includes a language button; and in response to an operation of the user on the language button, a language setting bar is added to the first email translation area, where the language setting bar includes a source language setting button and a target language setting button, the source language setting button is used to set a language of to-be-translated content, and the target language setting button is used to set a translated language of the to-be-translated content. In this way, the user can set a source language and a target language depending on a requirement of the user.

In a possible implementation, after the language setting bar is added to the first email translation area, in response to an operation of the user on the language button, the language setting bar is hidden. This helps the user hide the language setting bar by using the language button when the user does not use the language setting bar, so that the first user interface can be simpler.

In a possible implementation, the setting bar further includes at least one of the following buttons: a close button and a pull-up button; and the following operations are performed:
in response to an operation of the user on the close button, closing the first email translation area;
in response to an operation of the user on the pull-up button, displaying the first email translation area in full screen, and displaying a pull-down button in the setting bar; and
in response to an operation of the user on the pull-down button, exiting full screen display of the first email translation area.

The technical solution is conducive to making an interface more user-friendly when the first email translation area is displayed.

When the content written by the user is translated by using a cloud server, to make the user informed of the translation operation, in a possible implementation, in response to the translation operation of the user on the content written by the user, a second prompt box is popped up, where the second prompt box includes second prompt information and a second approval button, and the second prompt information is used to prompt the user to determine whether to agree to upload the content written by the user to the cloud server for translation; and in response to an operation on the second approval button, the first email translation area is added to the first user interface.

According to the invention, the first user interface further includes a suspend button; and in response to the translation operation on the content written by the user may be: in response to an operation on the suspend button, for example, tapping the suspend button by the user. By using the technical solution, the user finds an entry for email translation more easily.

In a possible implementation, in response to an operation of the user for viewing an email in an inbox, a second user interface is displayed, where the second user interface includes an email preview area and the suspend button, and the email preview area includes email body content; and in response to an operation of the user on the suspend button, a second email translation area is added to the second user interface, where the second email translation area includes a second result preview area, and the second result preview area includes a translation result of the email body content. In this way, the user enables the translation result of the email body content to be displayed on the second user interface by performing the operation on the suspend button. This is conducive to improving user operation efficiency and email viewing efficiency.

In a possible implementation, when a language used for the email body content is different from a preset system language, in response to the operation of the user for viewing an email in the inbox, a third prompt box is further popped up, where the third prompt box includes third prompt information, and the third prompt information is used to inform the user that the suspend button is used for translation. The technical solution is conducive to indicating a function of the suspend button to the user.

According to a second aspect, an embodiment of this application further provides an email translation method, including:
displaying a first user interface, where the first user interface includes an email writing area, and the email writing area includes content written by a user; in response to a translation operation of the user on the written content, adding a first email translation area to the first user interface, where the first email translation area includes a first result preview area and a function bar, the first result preview area includes a translation result of the content written by the user, and the function bar includes an insertion button; and in response to an operation of the user on the insertion button, adding the translation result to the email writing area, and displaying the translation result and the content written by the user.

In this embodiment of this application, the translation result can be added to the email writing area by performing the operation on the insertion button. This can simplify an operation manner and improve operation efficiency.

It should be noted that the operation on the insertion button may be a tapping operation on the insertion button, a touch and hold operation on the insertion button, a hard press operation on the insertion button, or the like. This is not limited in this embodiment of this application.

In a possible implementation, the translation result in the email writing area is located below the content written by the user, or the translation result in the email writing area is located above the content written by the user. The technical solution is conducive to view by the user.

In a possible implementation, the first email translation area further includes a setting bar, and the setting bar includes a language button; and in response to an operation of the user on the language button, a language setting bar is added to the first email translation area, where the language setting bar includes a source language setting button and a target language setting button, the source language setting button is used to set a language of to-be-translated content, and the target language setting button is used to set a translated language of the to-be-translated content. In this way, the user can set a source language and a target language depending on a requirement of the user.

In a possible implementation, after the language setting bar is added to the first email translation area, in response to an operation of the user on the language button, the language setting bar is hidden. This helps the user hide the language setting bar by using the language button when the user does not use the language setting bar, so that the first user interface can be simpler.

In a possible implementation, the setting bar further includes at least one of the following buttons: a close button and a pull-up button; and the following operations are performed:
in response to an operation of the user on the close button, closing the first email translation area;
in response to an operation of the user on the pull-up button, displaying the first email translation area in full screen, and displaying a pull-down button in the setting bar; and
in response to an operation of the user on the pull-down button, exiting full screen display of the first email translation area.

In a possible implementation, the method includes: exiting full screen display of the first email translation area, and displaying the pull-up button in the setting bar.

The technical solution is conducive to making an interface more user-friendly when the first email translation area is displayed.

When the content written by the user is translated by using a cloud server, to make the user informed of the translation operation, in a possible implementation, in response to the translation operation of the user on the written content, a second prompt box is popped up, where the second prompt box includes second prompt information and a second approval button, and the second prompt information is used to prompt the user to determine whether to agree to upload the content written by the user to the cloud server for translation; and in response to an operation on the second approval button, the first email translation area is added to the first user interface.

According to the invention,, the first user interface further includes a suspend button; and in response to the translation operation on the content written by the user may be: in response to an operation on the suspend button, for example, tapping the suspend button. By using the technical solution, the user finds an entry for email translation more easily.

In a possible implementation, in response to an operation of the user for viewing an email in the inbox, a second user interface is displayed, where the second user interface includes an email preview area and the suspend button, and the email preview area includes email body content; and in response to an operation of the user on the suspend button, a second email translation area is added to the second user interface, where the second email translation area includes a second result preview area, and the second result preview area includes a translation result of the email body content. In this way, the user enables the translation result of the email body content to be displayed on the second user interface by performing the operation on the suspend button. This is conducive to improving user operation efficiency and email viewing efficiency.

In a possible implementation, when a language used for the email body content is different from a preset system language, in response to the operation of the user for viewing an email in the inbox, a third prompt box is popped up, where the third prompt box includes third prompt information, and the third prompt information is used to inform the user that the suspend button is used for translation. The technical solution is conducive to indicating a function of the suspend button to the user.

According to a third aspect, an embodiment of this application further provides an email translation method, including:
displaying a first user interface, where the first user interface includes an email writing area and a suspend button, and the email writing area includes content written by a user;
in response to an operation of the user on the suspend button, adding a first email translation area to the first user interface, where the first email translation area includes a first result preview area and a function bar, the first result preview area includes a translation result of the content written by the user, and the function bar includes at least one of a replacement button and an insertion button;
in response to an operation of the user on the replacement button, replacing the content written by the user included in the email writing area with the translation result, and displaying the translation result; and
in response to an operation of the user on the insertion button, adding the translation result to the email writing area, and displaying the content written by the user and the translation result.

In this embodiment of this application, the content written by the user can be translated by performing the operation on the suspend button. This is convenient for the user to perform an operation and find an entry for email translation. In addition, the translation result can be added to the email writing area by performing the operation on the insertion button or the replacement button. This can simplify an operation manner and improve operation efficiency.

In a possible implementation, in response to the operation of the user on the replacement button, the content written by the user included in the email writing area is replaced with the translation result, and the translation result is displayed; and the first email translation area may further be hidden from the first user interface.

In a possible implementation, in response to the operation of the user on the insertion button, the translation result is added to the email writing area, and the content written by the user and the translation result are displayed; and the first email translation area may further be hidden.

The foregoing methods may be performed by an electronic device, for example, a mobile phone, a computer, a tablet, or another electronic device that can be used to write information.

According to a fourth aspect, an embodiment of this application further provides an electronic device, including a display, a memory, and one or more processors. The display is configured to display a user interface; the memory stores one or more computer programs; and the one or more processors are configured to invoke the one or more computer programs stored in the memory, to perform any one of the foregoing possible implementations.

According to a fifth aspect, an embodiment of this application provides a computer storage medium. The computer storage medium stores one or more computer programs; and when the computer program is executed by an electronic device, the electronic device is enabled to perform any one of the foregoing possible implementations.

According to a sixth aspect, an embodiment of this application provides a computer program product. When the computer program product runs on an electronic device, the electronic device is enabled to perform any one of the foregoing possible implementations.

According to a seventh aspect, an embodiment of this application provides a content translation method, including: displaying a user interface, where the user interface displays a suspend button and content written by a user; for example, displaying a chat screen, where the chat screen displays chat content written by a user in Chinese;
in response to an operation of the user on the suspend button, adding a translation area to the user interface, where the translation area includes a result preview area and a function bar, the result preview area includes a translation result of the content written by the user, and the function bar includes a replacement button; for example, in response to an operation of the user on the suspend button, displaying English in the result preview area in the translation area; and
in response to an operation of the user on the replacement button such as tapping the replacement button by the user, replacing the content written by the user with the translation result, for example, replacing the chat content written by the user in Chinese with English.

In a possible implementation, to-be-translated content may be content in a notepad, may be content entered by a user during web browsing, or may be content entered by a user displayed on a user interface of chat software, for example, a WeChat chat screen.

In a possible implementation, the content translation method may be performed by an electronic device, for example, a mobile phone, a computer, a tablet, or another electronic device that can be used to write content.

In possible implementation, the displaying mentioned above may be implemented by using a display screen. The display screen has a displaying function, and the display screen may have a touch function or may not have a touch function.

### BRIEF DESCRIPTION OF DRAWINGS

FIG. 1 is a schematic diagram of a possible hardware structure of an electronic device according to an embodiment of this application;
FIG. 2 is a schematic diagram of a home screen according to an embodiment of this application;
FIG. 3 is a schematic diagram of a user interface of email according to an embodiment of this application;
FIG. 4A and FIG. 4B are a schematic diagram of another user interface of email according to an embodiment of this application;
FIG. 5A to FIG. 5D are a schematic diagram of system language setting according to an embodiment of this application;
FIG. 6A to FIG. 6C are a schematic diagram of another user interface of email according to an embodiment of this application;
FIG. 7a-1 and FIG. 7a-2 are a schematic diagram of another user interface of email according to an embodiment of this application;

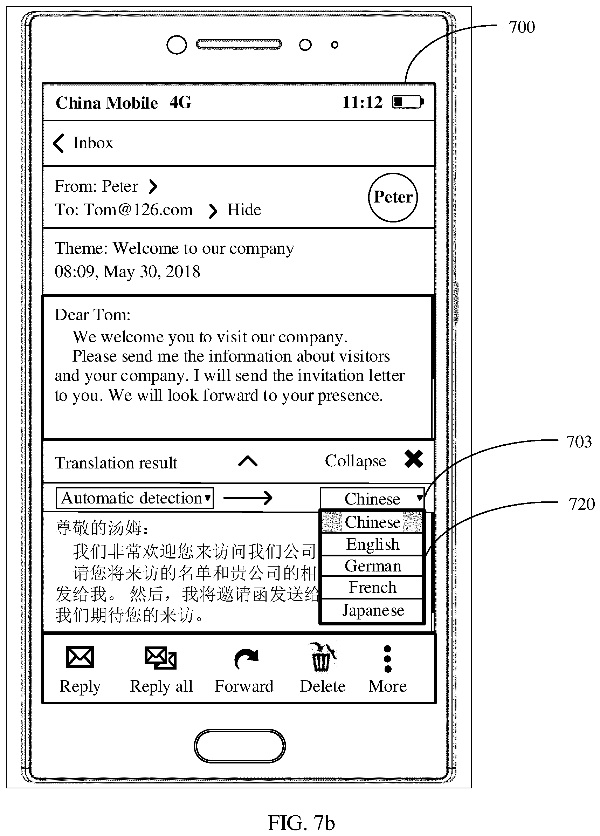

FIG. 7b is a schematic diagram of a target-language list according to an embodiment of this application;

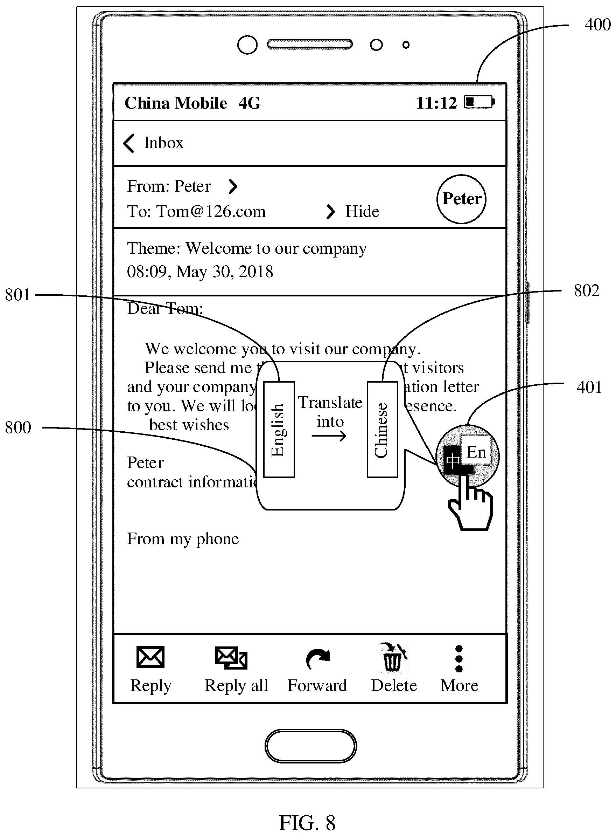

FIG. 8 is a schematic diagram of another user interface of email according to an embodiment of this application;

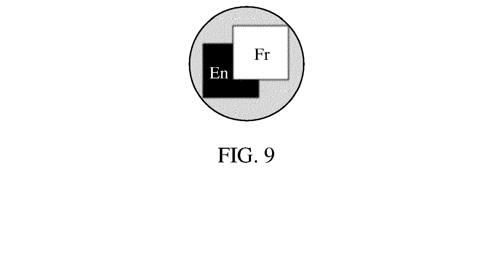

FIG. 9 is a schematic diagram of a suspend button according to an embodiment of this application;

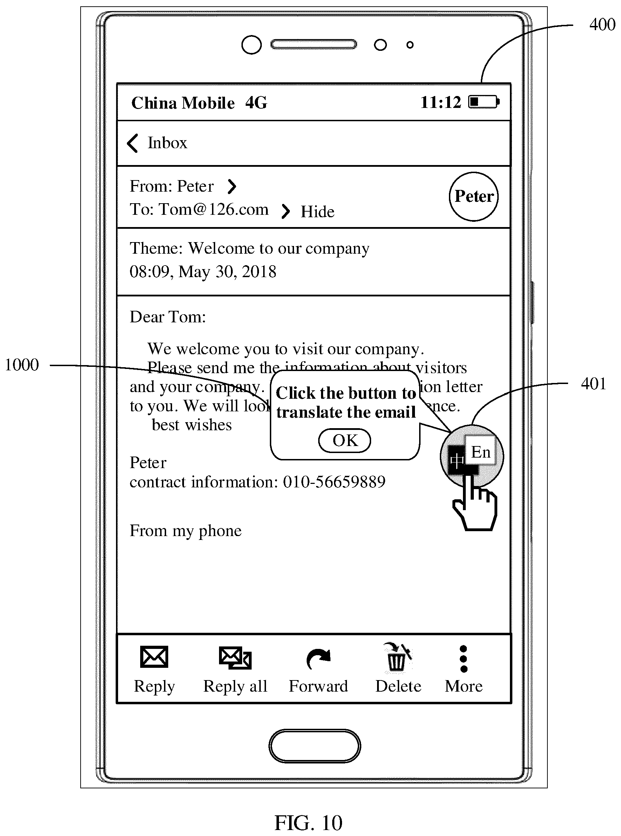

FIG. 10 is a schematic diagram of a prompt box according to an embodiment of this application;

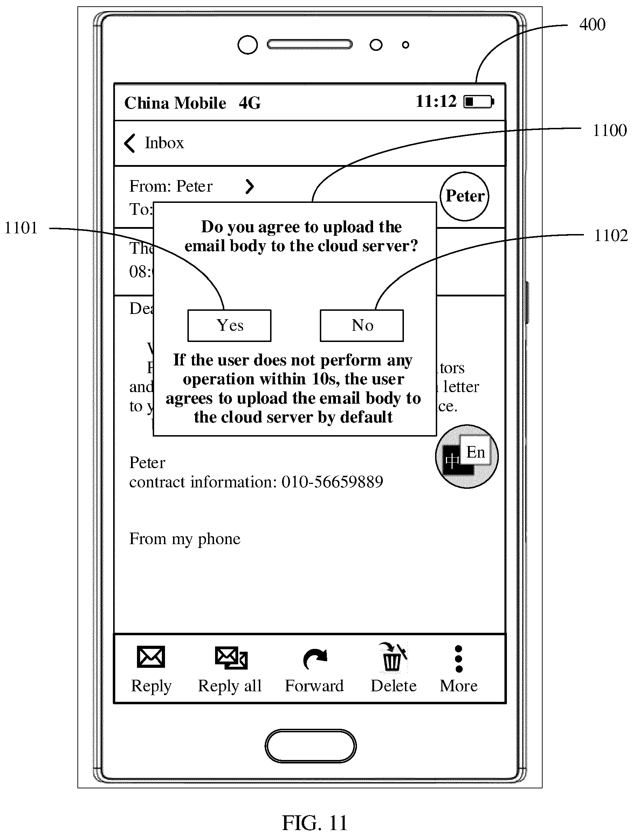

FIG. 11 is a schematic diagram of another prompt box according to an embodiment of this application;

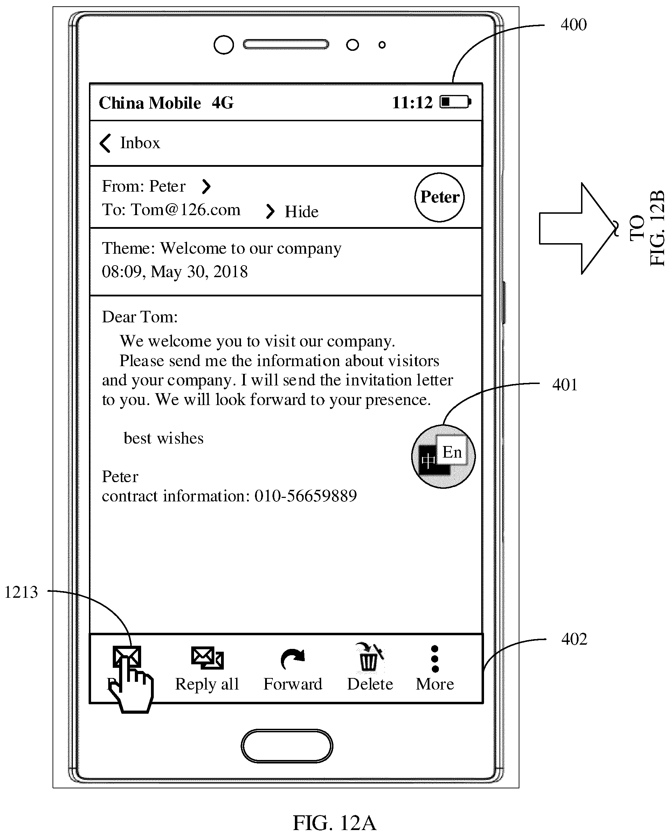

FIG. 12A to FIG. 12C are a schematic diagram of another user interface of email according to an embodiment of this application;

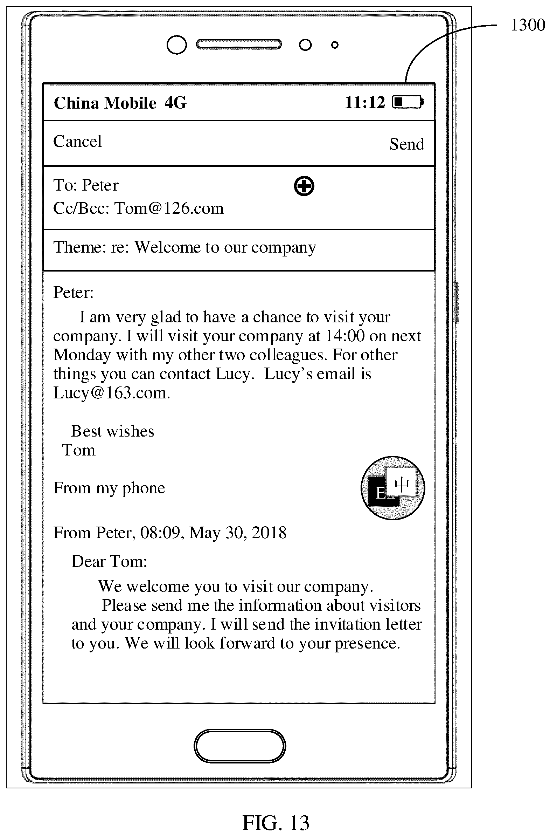

FIG. 13 is a schematic diagram of another user interface of email according to an embodiment of this application;

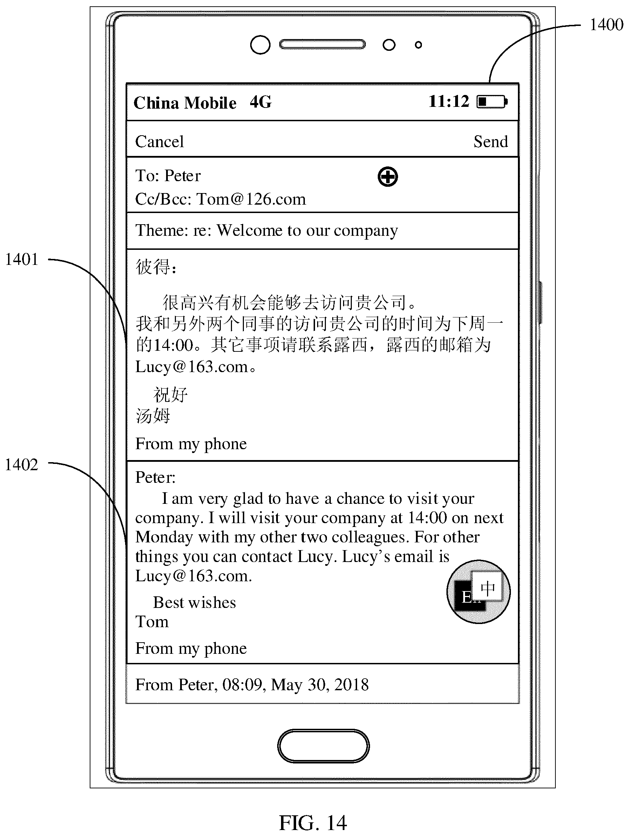

FIG. 14 is a schematic diagram of another user interface of email according to an embodiment of this application;
FIG. 15a-1 and FIG. 15a-2 are a schematic diagram of another user interface of email according to an embodiment of this application;

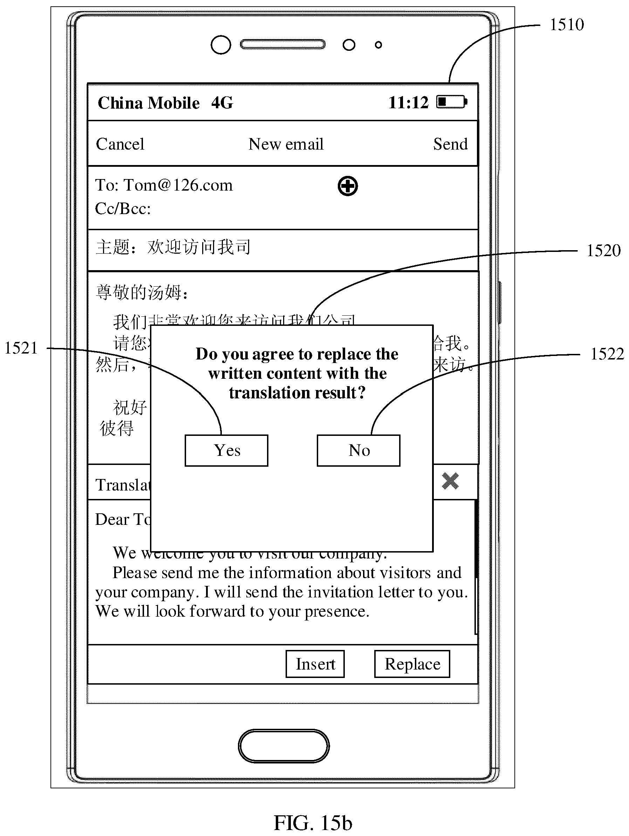

FIG. 15b is a schematic diagram of another prompt box according to an embodiment of this application;

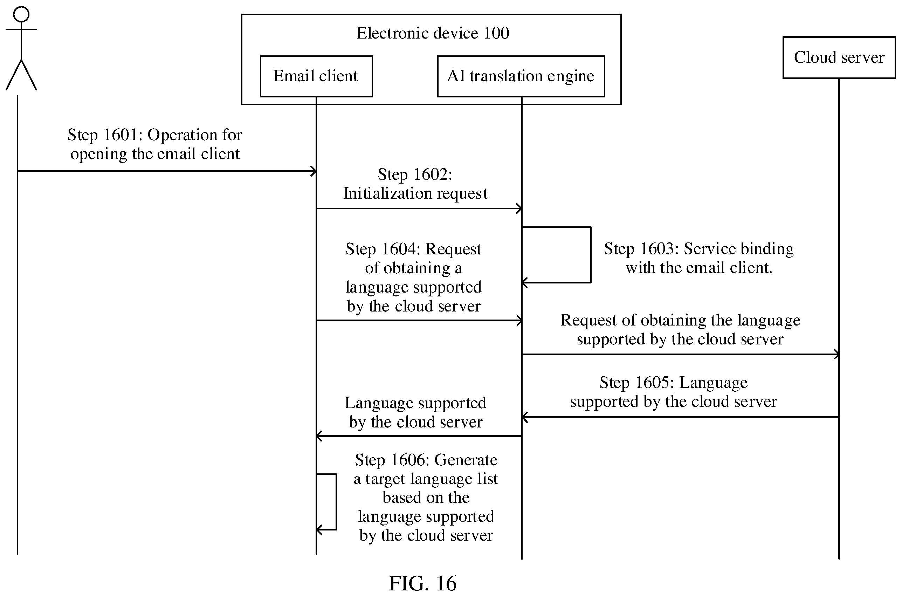

FIG. 16 is a schematic flowchart of a method for generating a target-language list according to an embodiment of this application;

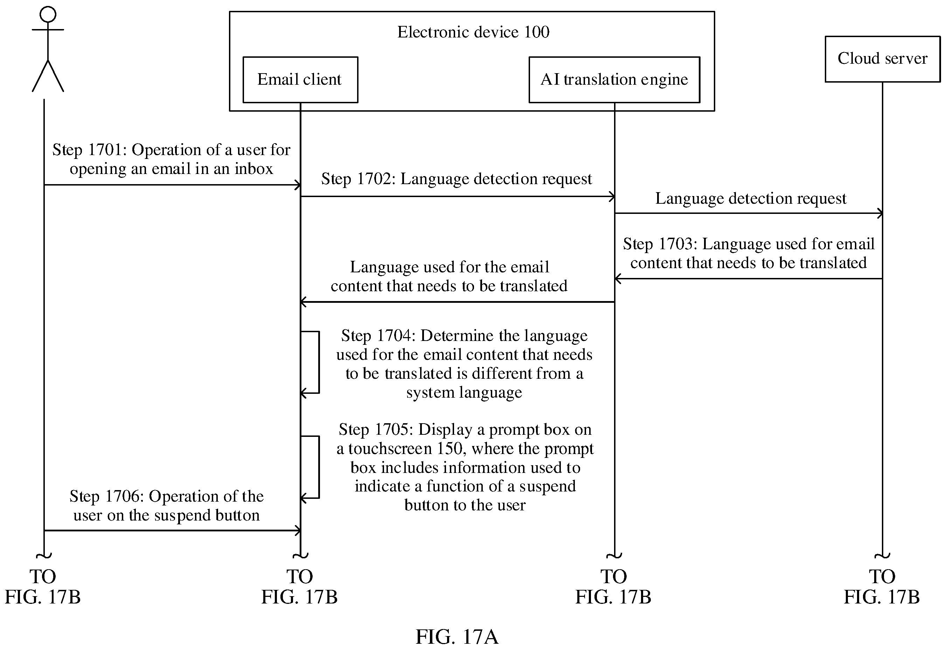

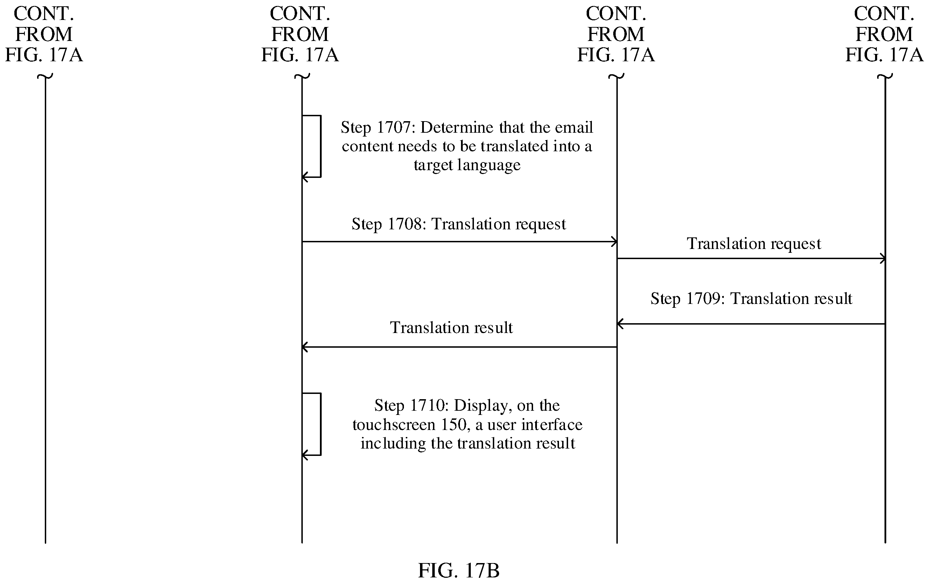

FIG. 17A and FIG. 17B are a schematic flowchart of an email translation method according to an embodiment of this application;

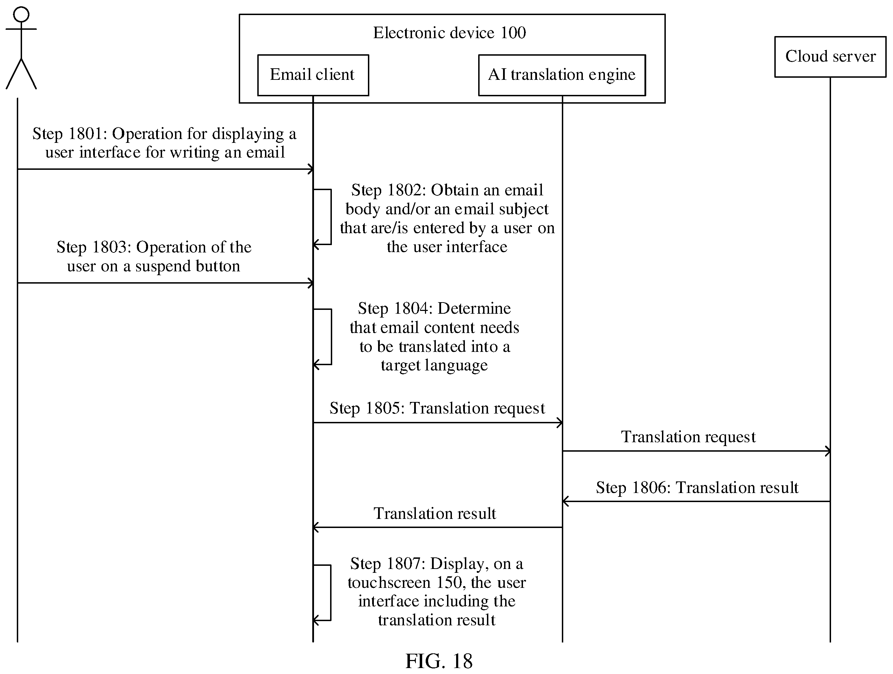

FIG. 18 is a schematic flowchart of another email translation method according to an embodiment of this application;

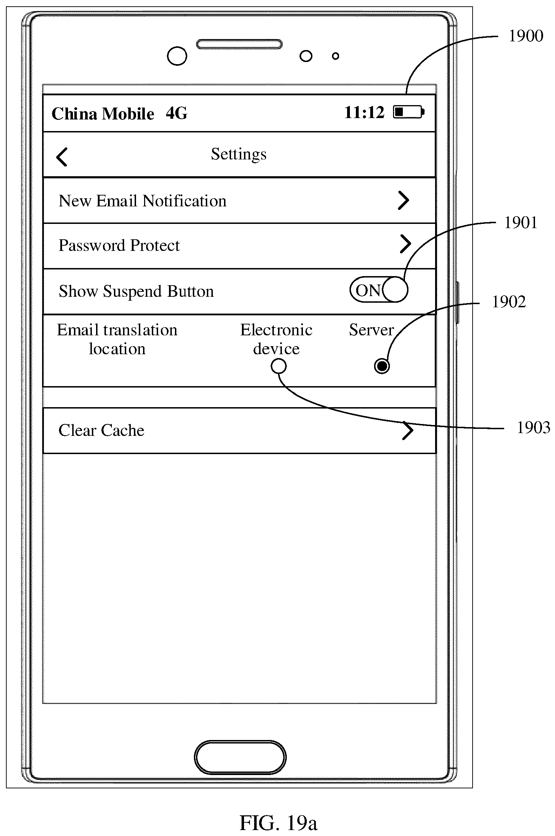

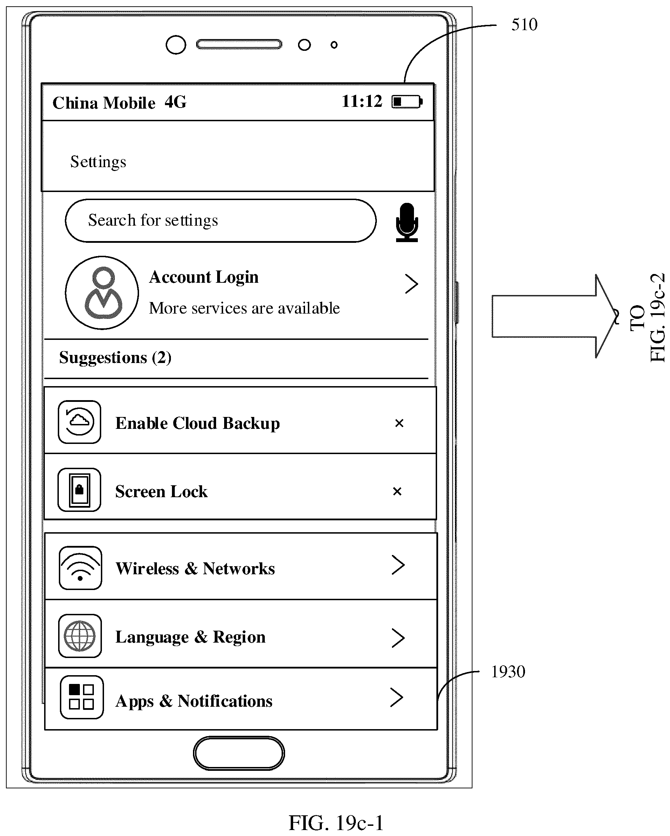

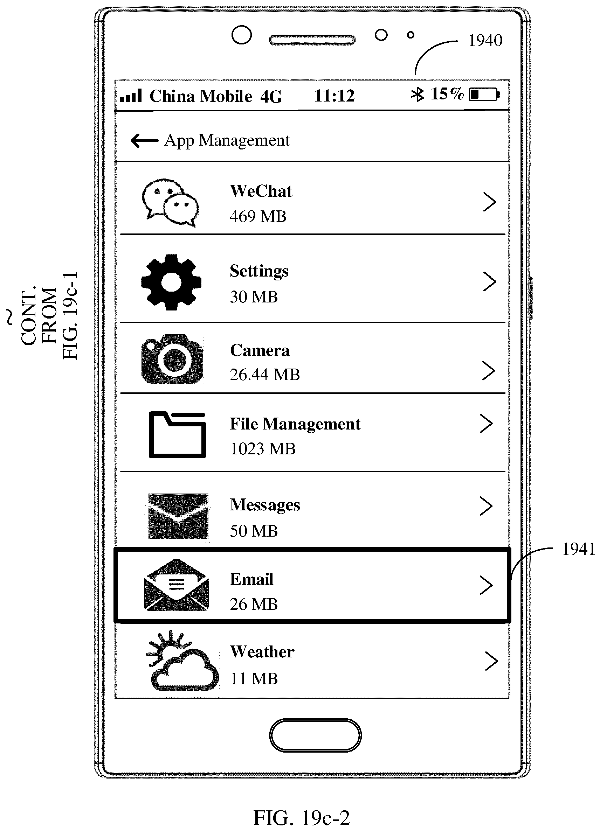

FIG. 19a is a schematic diagram of an email setting screen according to an embodiment of this application;
FIG. 19b-1 and FIG. 19b-2 are a schematic diagram of displaying an email setting screen according to an embodiment of this application;
FIG. 19c-1 and FIG. 19c-2 are another schematic diagram of displaying an email setting screen according to an embodiment of this application; and

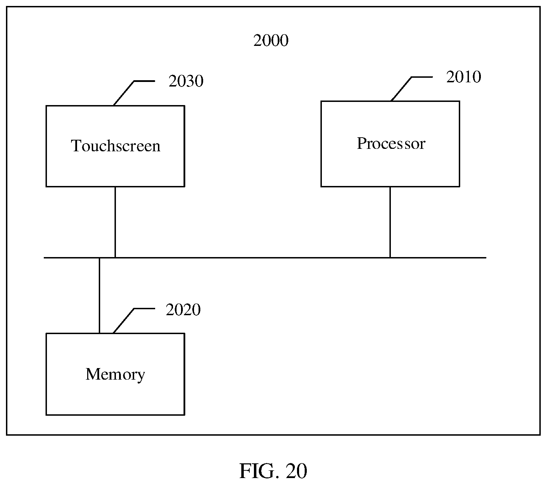

FIG. 20 is a schematic structural diagram of an electronic device according to an embodiment of this application.

### DESCRIPTION OF EMBODIMENTS

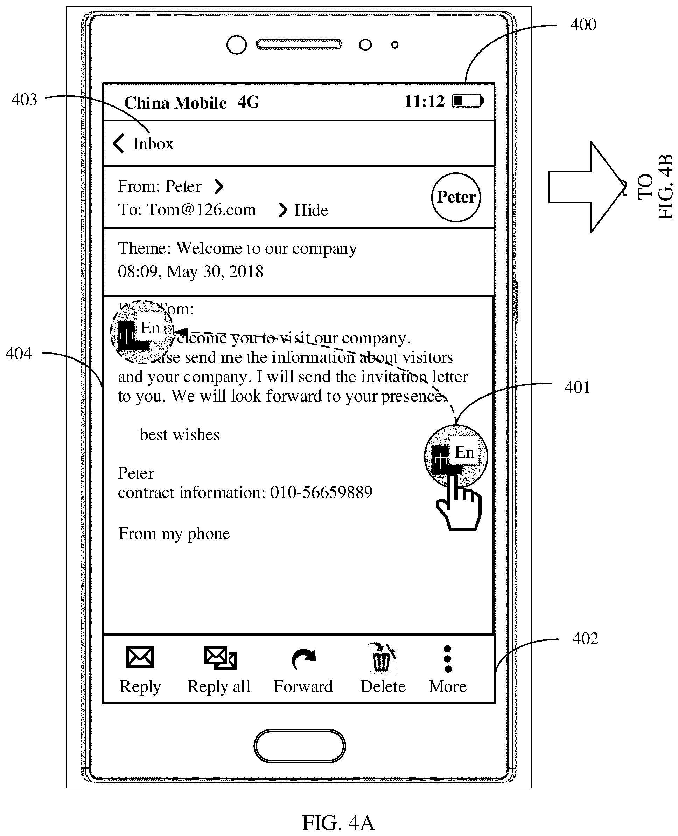

The invention is defined in the embodiments of this application with reference to the accompanying FIG. 4A, FIG. 4B, FIG. 6A, FIG. 6B, FIG. 6C, FIG. 7a-1, FIG. 7a-2, FIG. 7b, FIG. 10, FIG. 11, FIG. 12A, FIG. 12B, FIG. 12C, FIG. 13, FIG. 14, FIG. 15a-1, FIG. 15a-2 and FIG. 15b. The embodiments disclosed in this application may be applied to an electronic device. In some embodiments of this application, the electronic device may be a portable electronic device, such as a mobile phone, a tablet computer, a wearable device (for example, a smartwatch) or a vehicle-mounted device with a wireless communication function, that includes a function such as a personal digital assistant and/or a music player. An example embodiment of the portable electronic device includes but is not limited to a portable electronic device using iOS^{®}, Android^{®}, Microsoft^{®}, or another operating system. The portable electronic device may alternatively be a laptop (Laptop) computer with a touch-sensitive surface (for example, a touch panel) or the like. It should be further understood that, in some other embodiments of this application, the electronic device may alternatively be a desktop computer with a touch-sensitive surface (for example, a touch panel).

It should be understood that applications supported by the electronic device in the embodiments of this application include an email. In addition, the applications supported by the electronic device may further include a plurality of other applications, for example, drawing, a game, a phone, a video player, a music player, photo management, a camera, a browser, a calendar, a clock, and the like.

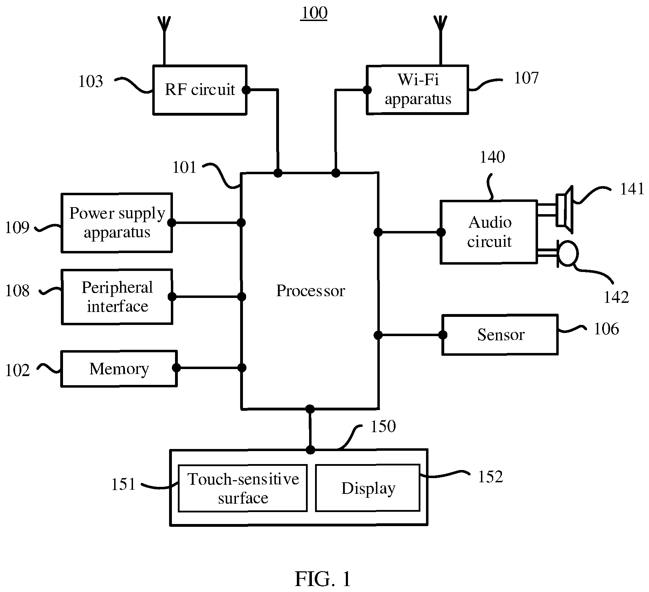

For example, FIG. 1 is a schematic diagram of a possible hardware structure of an electronic device. It should be understood that the hardware structure of the electronic device 100 shown in the figure is merely an example. In addition, the electronic device 100 may have more or fewer components than those shown in the figure, may combine two or more components, or may have different component configurations. Components shown in the figure may be implemented on hardware, software, or a combination of hardware and software that includes one or more signal processing and/or application-specific integrated circuits.

The electronic device 100 may include one or more processors 101, a memory 102, a radio frequency (radio frequency, RF) circuit 103, an audio circuit 140, a speaker 141, a microphone 142, a touchscreen 150, one or more sensors 106, a wireless fidelity (wireless fidelity, Wi-Fi) apparatus 107, a peripheral interface 108, and a power supply apparatus 109. These components may perform communication by using one or more communications wires (for example, buses). A person skilled in the art may understand that, the hardware structure shown in FIG. 1 does not constitute a limitation on the electronic device 100, and the electronic device 100 may include more or fewer components than those shown in the figure, or some components may be combined, or a different component deployment may be used.

The following describes each component of the electronic device 100 in detail.

The processor 101 is a control center of the electronic device 100, and is connected to each part of the electronic device 100 by using various interfaces and lines. The processor 101 performs various functions of the electronic device 100 and processes data by running or executing an application (application, APP) stored in the memory 102, and invoking data and an instruction that are stored in the memory 102. For example, the processor 101 may translate an email body or an email subject into a target language.

In some embodiments, the processor 101 may include one or more processing units. Alternatively, an application processor and a modem processor may be integrated into the processor 101. The application processor mainly processes an operating system, a user interface, an application, and the like, and the modem processor mainly processes wireless communication. It may be understood that, alternatively, the modem processor may not be integrated into the processor 101. For example, the processor 101 may be a Kirin 970 chip. In some other embodiments of this application, the processor 101 may further include a fingerprint verification chip, configured to verify a collected fingerprint.

The memory 102 may be configured to store an application, data, and various operating systems, such as iOS^{®}, Android^{®}, Microsoft^{®}, or another operating system. The memory 102 mainly includes a program storage area and a data storage area. The program storage area may store an operating system, and an application required by at least one function (for example, a sound playing function, or an image playing function). The data storage area may store data created when the electronic device 100 is used, for example, a photo or a video taken by a user by using the electronic device 100, or audio recorded by the user by using the electronic device 100. The data storage area may further store a file such as a picture downloaded by the user, an email written by the user by using the electronic device 100, an email received by the electronic device 100, or the like. In addition, the memory 102 may include a nonvolatile memory, such as a magnetic disk storage device or a flash memory device. It may be understood that the application may be stored in a memory. The data, such as the photo, the video, or the email, may be stored in another memory.

The RF circuit 103 may be configured to receive and send a radio signal in an information receiving/sending process or a call process. Specifically, the RF circuit 103 may send downlink data received from a base station to the processor 101 for processing. In addition, the RF circuit 103 may further send uplink data to the base station. Generally, the RF circuit 103 includes but is not limited to an antenna, at least one amplifier, a transceiver, a coupler, a low noise amplifier, a duplexer, and the like. In addition, the RF circuit 103 may further communicate with another device through wireless communication. The wireless communication may use any communication standard or protocol, including but not limited to a global system for mobile communications, a general packet radio service, code division multiple access, wideband code division multiple access, long term evolution, an email, a short message service, and the like.

The audio circuit 140, the speaker 141, and the microphone 142 may provide an audio interface between the user and the electronic device 100. The audio circuit 140 may convert received audio data into an electrical signal and then transmit the electrical signal to the speaker 141, and the speaker 141 converts the electrical signal into a sound signal for output. In addition, the microphone 142 may convert a collected sound signal into an electrical signal. The audio circuit 140 receives the electrical signal and converts the electrical signal into audio data, and then outputs the audio data to the RF circuit 103 to send the audio data to, for example, a mobile phone, or stores the audio data to the memory 102 for further processing.

The touchscreen 150 may include a touch-sensitive surface 151 and a display 152. The touch-sensitive surface 151 (for example, a touch panel) may collect a touch event performed by the user of the electronic device 100 on or near the touch-sensitive surface 151 (for example, an operation performed by the user on the touch-sensitive surface 151 or near the touch-sensitive surface 151 by using any suitable object such as a finger or a stylus), and send collected touch information to another component such as the processor 101. The touch event performed by the user near the touch-sensitive surface 151 may be referred to as a floating touch. The floating touch may mean that the user does not need to directly touch a touchpad for selecting, moving, or dragging a target (for example, an App icon), and the user only needs to be near the electronic device to perform a desired function. In an application scenario of the floating touch, terms such as "touch" and "contact" do not imply a direct contact with the touchscreen 150, but a contact near or close to the touchscreen 150. The touch-sensitive surface 151 on which the floating touch can be performed may be implemented in a capacitive type, an infrared light sensing type, an ultrasonic wave type, or the like.

The touch-sensitive surface 151 may include two parts: a touch detection apparatus and a touch controller. The touch detection apparatus detects a touch direction and position of the user, detects a signal brought by the touch operation, and transmits the signal to the touch controller. The touch controller receives touch information from the touch detection apparatus, converts the touch information into touch point coordinates, and then sends the touch point coordinates to the processor 101. The touch controller may further receive an instruction sent by the processor 101, and execute the instruction. In addition, the touch-sensitive surface 151 may be implemented in a plurality of types such as a resistive type, a capacitive type, an infrared type, and a surface acoustic wave type.

The display (also referred to as a display screen) 152 may be configured to display information that is entered by the user or information provided to the user, and various menus of the electronic device 100. For example, the display in this embodiment of this application may be an LCD (liquid crystal display, liquid crystal display) or an organic light-emitting diode (organic light-emitting diode, OLED). For example, an active-matrix organic light emitting diode (active matrix organic light emitting diode, AMOLED) may be used.

It should be understood that the touch-sensitive surface 151 may cover the display 152. After detecting a touch event on or near the touch-sensitive surface 151, the touch-sensitive surface 151 transmits the touch event to the processor 101 to determine a type of the touch event, and then the processor 101 may provide corresponding visual output on the display 152 based on the type of the touch event. Although in FIG. 1, the touch-sensitive surface 151 and the display 152 are used as two independent components to implement input and output functions of the electronic device 100, in some embodiments, the touch-sensitive surface 151 and the display 152 may be integrated to implement the input and output functions of the electronic device 100. It may be understood that the touchscreen 150 is formed by stacking a plurality of layers of materials. In this embodiment of this application, only the touch-sensitive surface (layer) and the display (layer) are presented, and other layers are not described in detail in this embodiment of this application. In addition, in some other embodiments of this application, the touch-sensitive surface 151 may cover the display 152, and the size of the touch-sensitive surface 151 may be greater than the size of the display 152, so that the display 152 is entirely covered by the touch-sensitive surface 151. Alternatively, the touch-sensitive surface 151 may be disposed on a front side of the electronic device 100 in a full panel form, in other words, any touch performed by the user on the front side of the electronic device 100 can be sensed by the electronic device. In this way, full touch experience on the front side of the electronic device can be implemented. In some other embodiments, the touch-sensitive surface 151 is disposed on a front side of the electronic device 100 in a full panel form, and the display 152 may also be disposed on the front side of the electronic device 100 in a full panel form. In this way, a bezel-less structure can be implemented on the front side of the electronic device. In some other embodiments of this application, the touchscreen 150 may further include a series of pressure sensor arrays, so that the electronic device can sense pressure exerted on the touchscreen 150 by the touch event.

The one or more sensors 106 may be a light sensor, a motion sensor, or another sensor. Specifically, the light sensor may include an ambient light sensor and an optical proximity sensor. The ambient light sensor may adjust luminance of the display 152 based on intensity of ambient light. When a user answers a call by using the electronic device 100, the user moves the electronic device 100 to an ear. If the optical proximity sensor detects that the electronic device 100 is close to the ear, the optical proximity sensor may notify the processor 101 of an event that the electronic device 100 is close to the ear, and the processor 101 controls the display 152 to turn from bright to dark. As one type of motion sensor, an accelerometer sensor may detect a value of acceleration in each direction (generally, three axes), may detect a value and a direction of gravity of the electronic device 100, and may be applied to an application for identifying a posture (for example, screen switching between a landscape mode and a portrait mode, a related game, and magnetometer posture calibration) of the electronic device, a function related to vibration recognition (for example, a pedometer, or a knock), and the like.

In some embodiments of this application, the sensor 106 may further include a fingerprint sensor. For example, the fingerprint sensor may be disposed on a rear side of the electronic device 100 (for example, below a rear-facing camera), or the fingerprint sensor is disposed on the front side of the electronic device 100 (for example, below the touchscreen 150). In addition, the fingerprint sensor may be disposed on the touchscreen 150 to implement a fingerprint recognition function. To be specific, the fingerprint sensor may be integrated with the touchscreen 150 to implement the fingerprint recognition function of the electronic device 100. In this case, the fingerprint sensor may be disposed on the touchscreen 150, may be a part of the touchscreen 150, or may be disposed on the touchscreen 150 in another manner. In addition, the fingerprint sensor may be further implemented as a full-panel fingerprint sensor. In this case, the touchscreen 150 may be considered as a panel on which a fingerprint may be collected at any position. In some embodiments, the fingerprint sensor may process a collected fingerprint (for example, the fingerprint sensor verifies the collected fingerprint), and send a fingerprint processing result (for example, whether the fingerprint verification succeeds) to the processor 101, and the processor 101 performs corresponding processing based on the fingerprint processing result. In some other embodiments, the fingerprint sensor may further send a collected fingerprint to the processor 101, so that the processor 101 processes the fingerprint (for example, the processor 101 verifies the fingerprint). In this embodiment of this application, the fingerprint sensor may use any type of sensing technology, including but not limited to an optical sensing technology, a capacitive sensing technology, a piezoelectric sensing technology, an ultrasonic sensing technology, or the like. In addition, other sensors such as a gyroscope, a barometer, a hygrometer, a thermometer, and an infrared sensor may be disposed in the electronic device 100. Details are not described herein.

The Wi-Fi apparatus 107 is configured to provide the electronic device 100 with network access that complies with a Wi-Fi-related standard or protocol. The electronic device 100 may access a Wi-Fi wireless access point by using the Wi-Fi apparatus 107, to help the user receive or send an email, browse a web page, access streaming media, and the like. The Wi-Fi apparatus 107 provides wireless broadband Internet access for the user. In some other embodiments, the Wi-Fi apparatus 107 may also be used as a Wi-Fi wireless access point and may provide Wi-Fi network access for another electronic device.

The peripheral interface 108 is configured to provide various interfaces for an external input/output device (for example, a keyboard, a mouse, an external display, an external memory, or a subscriber identification module card). For example, the electronic device 100 is connected to the mouse by using a universal serial bus interface, and the electronic device 100 is connected, by using a metal contact on a card slot of the subscriber identity module card, to the SIM card provided by an operator. The peripheral interface 108 may be configured to couple the external input/output peripheral device to the processor 101 and the memory 102.

The electronic device 100 may further include the power supply apparatus 109 (for example, a battery and a power management chip) that supplies power to the components. The battery may be logically connected to the processor 101 by using the power management chip, so that functions such as charging, discharging, and power consumption management are implemented by using the power supply apparatus 109.

Although not shown in FIG. 1, the electronic device 100 may further include a Bluetooth apparatus, a positioning apparatus, a camera (for example, a front-facing camera and a rear-facing camera), a flash, a micro projection apparatus, a near field communication (near field communication, NFC) apparatus, and the like. Details are not described herein. The front-facing camera may be configured to capture facial feature information, and the processor 101 may perform facial recognition on the facial feature information, so as to perform subsequent processing.

All the following embodiments can be implemented on an electronic device (for example, a mobile phone or a tablet computer) having the foregoing hardware structure.

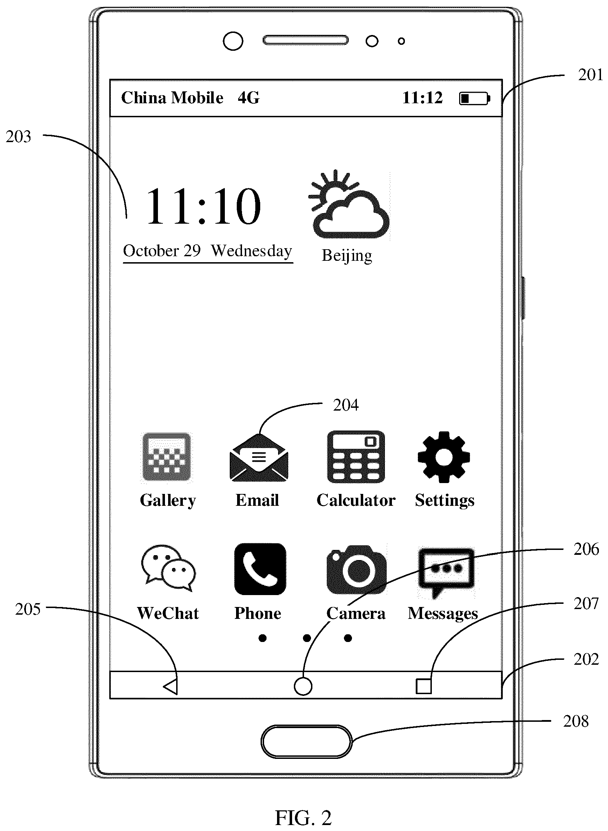

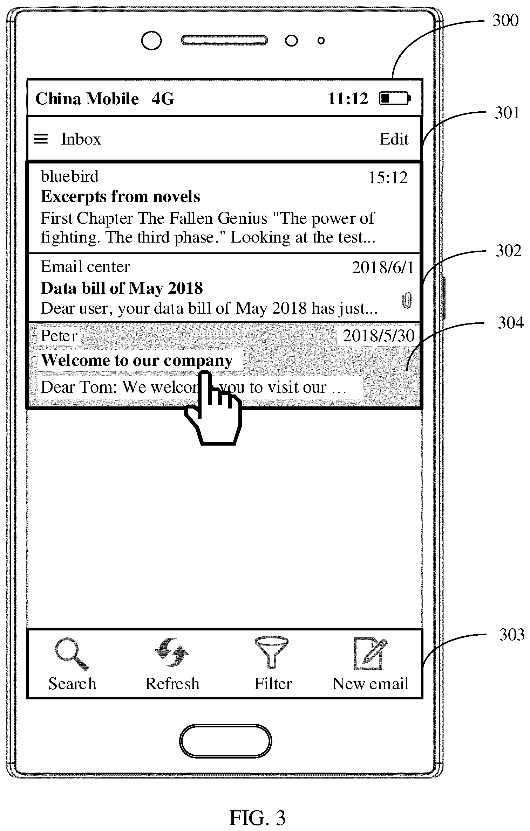

For example, FIG. 2 is a schematic diagram of a home screen displayed on the touchscreen 150 of the electronic device 100. The home screen may include a status bar 201, a navigation bar 202 that can be hidden, and a time/weather widget (Widget) 203, and further includes icons of a plurality of applications such as an email icon 204. The status bar 201 may include a name of an operator (China Mobile), a mobile network identifier (for example, 4G), time, and a battery level. The navigation bar 202 may include a back button 205, a home button 206, and a menu button 207. In some embodiments, the back button may also be referred to as a return button or a backward button; the home button may also be referred to as a main screen button; and a menu button may also be referred to as a historical task viewing button. In addition, it can be understood that in some other embodiments, the status bar 201 may further include a Bluetooth icon, a Wi-Fi icon, an icon of an external device, and the like. It can also be understood that in some other embodiments, the home screen shown in FIG. 2 may further include a dock bar. The dock bar may include icons of common applications and the like. After the electronic device 100 detects a touch operation of a user finger (or a stylus or the like) on an icon of an application, in response to the touch operation, the electronic device 100 starts the application, and displays a user interface of the application on the touchscreen 150. For example, if detecting a touch operation on the email icon 204, the electronic device 100 displays a user interface of email on the touchscreen 150 in response to the touch operation. For example, the user interface of email may be a user interface 300 shown in FIG. 3. The user interface 300 of email may include a navigation bar 301, an email list 302, and a function bar 303. For example, the function bar 303 includes a button used for searching the email list 302 for an email, a button used for refreshing the email list 302, a button used for filtering an email in the email list 302, and a button used for displaying a user interface for writing a new email. It can be understood that a quantity and functions of buttons included in the function bar 303 are not limited in this embodiment of this application. It can be understood that the button included in the function bar 303 may be a virtual button or may be a physical button. This is not limited in this embodiment of this application.

In some other embodiments, the electronic device 100 may include a home screen button 208, as shown in FIG. 2. The home screen button 208 may be a physical key or may be a virtual key. The home screen button 208 is configured to return from a user interface displayed on the touchscreen 150 to the home screen based on a user operation. This can be convenient for a user to view the home screen at any time and perform an operation on a control (for example, an icon) on the home screen. The operation may specifically be pressing the home screen button 208 by the user. In some other embodiments of this application, the home screen button 208 may further be integrated with a fingerprint sensor, so that when a user presses the home screen button 208, the electronic device 100 can perform fingerprint collection and confirm an identity of the user. In some other embodiments, the electronic device 100 may alternatively not include a home screen button 208.

For simplification of a user operation during translation of content of an email, in this embodiment of this application, a suspend button may be added to a user interface for writing an email or viewing an email, so that the electronic device 100 can display a translation result of the email in response to an operation on the suspend button. This simplifies a user operation and further improves user officing efficiency.

The user interface for writing an email may be a user interface for replying to a received email, may be a user interface for writing a new email, may be a user interface for email forwarding, or the like. The user interface for viewing an email may be a user interface for viewing a received email, may be a user interface for viewing a sent email, may be a user interface for viewing an email in a draft box, or the like. For example, the electronic device 100 may display a suspend button on the user interface for viewing an email, in response to an operation of displaying the user interface for viewing an email. In this way, when a user is unfamiliar with a language used for an email displayed on the touchscreen 150, the user can translate, by performing an operation on the suspend button (for example, a touch operation on the suspend button), the email into a language with which the user is familiar (for example, a system setting language). This is conducive to improving email viewing efficiency of the user. For another example, the electronic device 100 may display a suspend button on the user interface for writing an email, in response to an operation of displaying the user interface for writing an email. In this way, after a user has written a to-be-sent email by using a familiar language on the user interface for writing an email, for ease of viewing the email by a recipient, the user can translate, by performing an operation on the suspend button, the written email into a language familiar to the recipient and then send the email to the recipient. This is conducive to improving writing efficiency of the sender, and improving viewing efficiency of the recipient.

The following uses a user interface for viewing a received email as an example for detailed description.

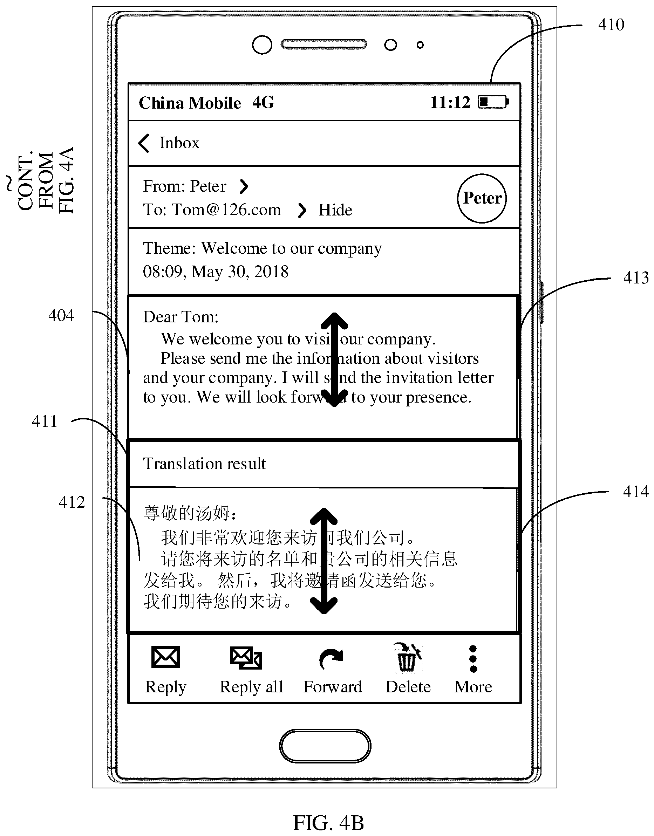

The electronic device 100 may display the user interface 300 shown in FIG. 3 on the touchscreen 150. The user interface 300 includes the email list 302. Then, the electronic device 100 detects a touch operation on an area 304 included in the email list 302, where the area 304 includes at least one of a sender Peter, an email subject "Welcome to our company", and partial email body content. As shown in FIG. 3, an email in the email list 302 may be displayed in the area 304. In response to the touch operation on the area 304, the electronic device 100 displays, on the touchscreen 150, a user interface illustrating email content details about an email with the email subject "Welcome to our company" sent by the sender Peter. The following uses an example for detailed description in which the user interface illustrating email content details is a user interface 400 shown in FIG. 4A. As shown in FIG. 4A, the user interface 400 includes an email preview area 404 and a suspend button 401, and the email preview area 404 includes email body content; and if detecting an operation on the suspend button 401, the electronic device 100 adds an email translation area to the user interface 400 in response to the operation on the suspend button 401, where the email translation area includes a result preview area, and the result preview area includes a translation result of the email body content. For example, a user interface after the email translation area is added to the user interface 400 may be shown as a user interface 410 in FIG. 4B. Using the user interface 410 as an example, the user interface 410 includes an email preview area 404 and an email translation area 411, where the email translation area 411 includes a result preview area 412, and the result preview area 412 includes a translation result of email body content. In addition, in some embodiments, for ease of viewing content in the email preview area 404 on the user interface 410 by a user, the content may be viewed by sliding up and down within the email preview area 404. For ease of learning about viewing progress by the user, a progress bar 413 may be added to the email preview area 404, so that the user can learn about a location, in the entire email body content, of email body content currently displayed in the email preview area 404. Similarly, for ease of viewing a translation result in the result preview area 412 on the user interface 410 by the user, the translation result may be viewed by sliding up and down within the result preview area 412. For ease of learning about viewing progress by the user, a progress bar 414 may be added to the result preview area 412, so that the user can learn about a location, in the translation result of the entire email body content, of a translation result currently displayed in the result preview area 412. Moreover, it should be noted that the suspend button 401 may be displayed on the user interface 410, or the suspend button 401 may be hidden. This is not limited.

It can be understood that, the operation on the suspend button 401 may be a touch operation on the suspend button 401 (for example, tapping the suspend button or double-tapping the suspend button), a touch and hold operation on the suspend button 401, a hard press operation on the suspend button 401, or the like. This is not limited. It should be noted that the user interface shown in FIG. 4A is an example of the user interface for viewing a received email in this embodiment of this application.

In some other embodiments, a location of the suspend button 401 is movable. For example, if a user finger presses and holds the suspend button 401, the suspend button 401 can move following a motion trail of the user finger. In addition, as shown in FIG. 4A, the user interface 400 may further include a function bar 402, a button 403 used for returning to a previous-level menu, a sender, a recipient, an email subject, email body, and the like. For example, the function bar 402 may include a button used for email reply, a button used for email forwarding, and a button used for email deletion. It can be understood that the function bar 402 may alternatively include at least one of a button used for email reply, a button used for email forwarding, and a button used for email deletion. In some other embodiments, the function bar 402 may further include a button used for email collection, and the like. A quantity and functions of buttons included in the function bar 402 are not limited in this embodiment of this application.

The following describes a case in which the electronic device 100 adds the email translation area 411 to the user interface 400 in response to the operation on the suspend button 401. The email translation area 411 includes the result preview area 412, and the result preview area 412 includes the translation result of the email body content. It should be noted that in some embodiments, the user may perform editing, cutting, copying, and the like on the translation result included in the result preview area 412.

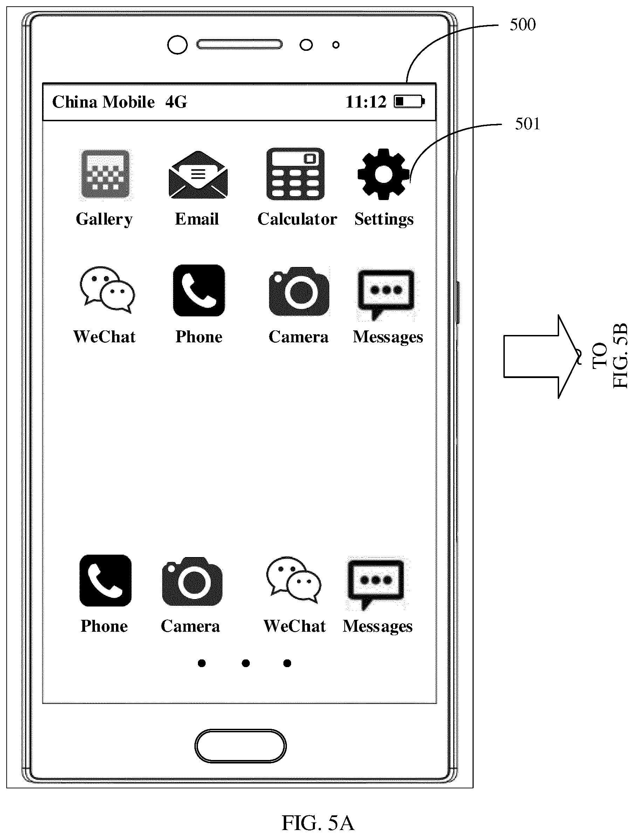

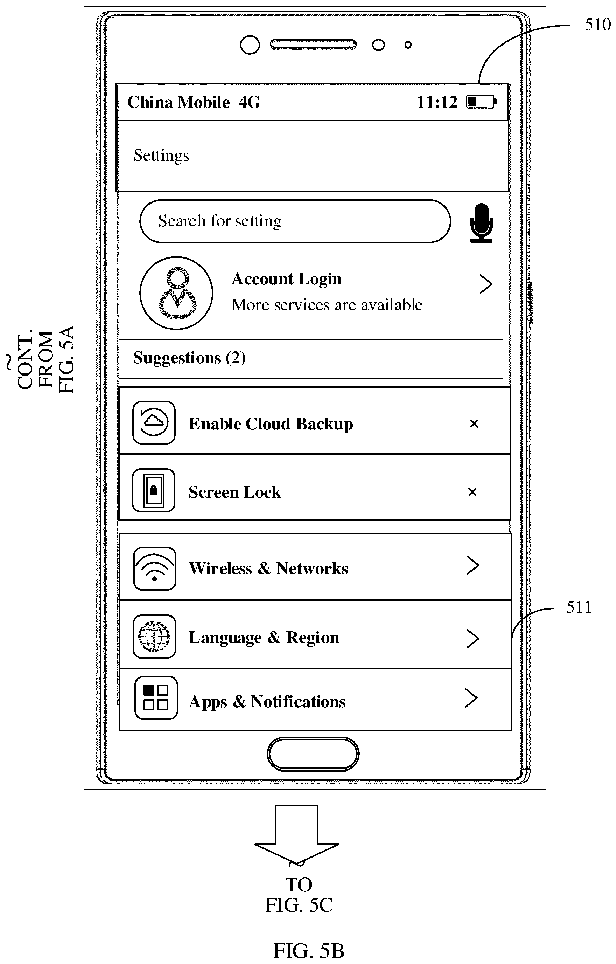

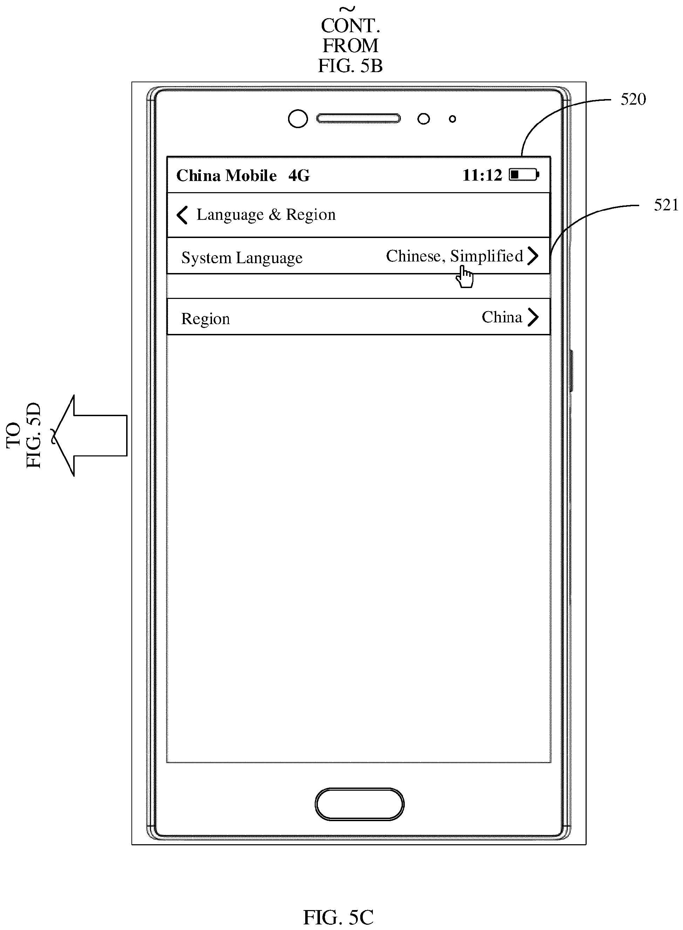

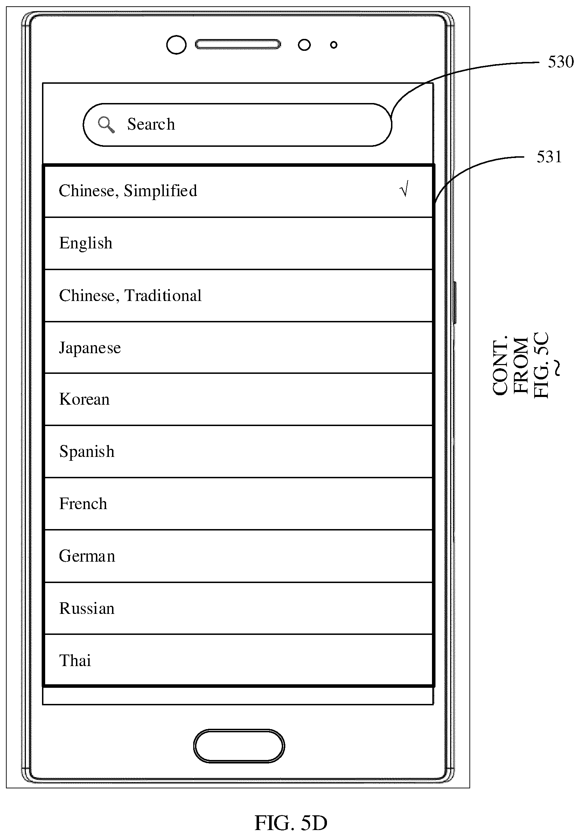

In some embodiments, a language of the translation result may be a system language. For example, if the system language is simplified Chinese and a language of the email body content is English, the language of the translation result is simplified Chinese. For another example, if the system language is English and a language of the email body content is Japanese, the language of the translation result is English. It should be noted that the system language in this embodiment of this application may be set by using a system setting screen. For example, a system setting screen 520 shown in FIG. 5C, and the electronic device 100 may display the system setting screen 520 on the touchscreen 150 in the following manners. The electronic device 100 may display a system setting screen 510 on the touchscreen 150, in response to a touch operation on a setting icon 501 included in the user interface 500 shown in FIG. 5A. The system setting screen 510 may include a button 511 used for language and region settings. In some other embodiments, the system setting screen 510 may further include a button used for account login, a button used for enabling cloud backup, a button used for screen locking, a button used for wireless and network settings, a button used for applications and notifications, and the like. A quantity and functions of buttons included in the system setting screen 510 are not limited. The electronic device 100 may display the system setting screen 520 on the touchscreen 150 in response to a touch operation on the button 511 used for language and region settings. The system setting screen 520 includes a button 521 used for system language setting. In some other embodiments, the electronic device 100 may alternatively display the system setting screen 520 on the touchscreen 150, in response to a quick operation of the user. A manner in which the electronic device 100 displays the system setting screen 520 on the touchscreen 150 is not limited in this embodiment of this application. The electronic device 100 may display, on the touchscreen 150, a language list 531 supported by the electronic device 100, in response to an operation on the button 521 (for example, tapping "system language"). The user may select a corresponding language from the language list 531 to set the system language. In some other embodiments, the user may alternatively enter a language (for example, English) into a search box 530, to search for the language list 531 on the touchscreen 150 for the language. If the language list 531 includes the language entered into the search box 530, the language entered into the search box 530 may be highlighted on the touchscreen 150, for the user to easily search for the language. The user interface 400 shown in FIG. 4A is used as an example. The electronic device 100 adds the email translation area 411 to the user interface 400, in response to the operation on the suspend button 401, where the email translation area 411 includes the result preview area 412, and the result preview area 412 includes the translation result of the email body content. When the system language is simplified Chinese, the translation result of the email body content included in the result preview area 412 is simplified Chinese. It should be noted that in this embodiment of this application, the electronic device 100 may translate the email body content, in response to the operation on the suspend button 401. Alternatively, the electronic device 100 may report the email body content to a cloud server for translation; and after the cloud server completes translation, the cloud server returns a translation result to the electronic device 100, so that the electronic device 100 can present the translation result to the user.

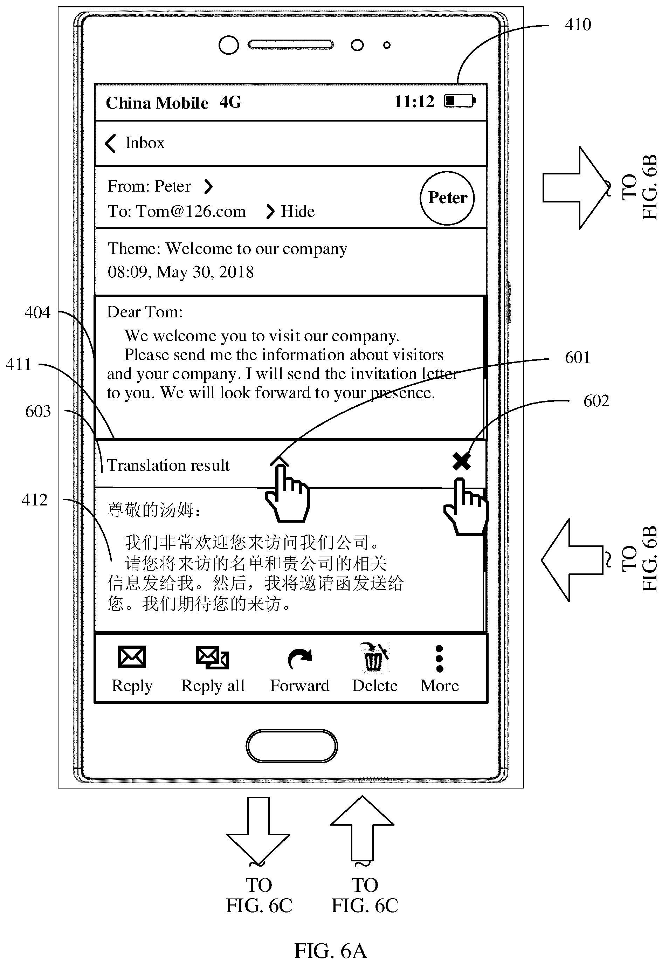

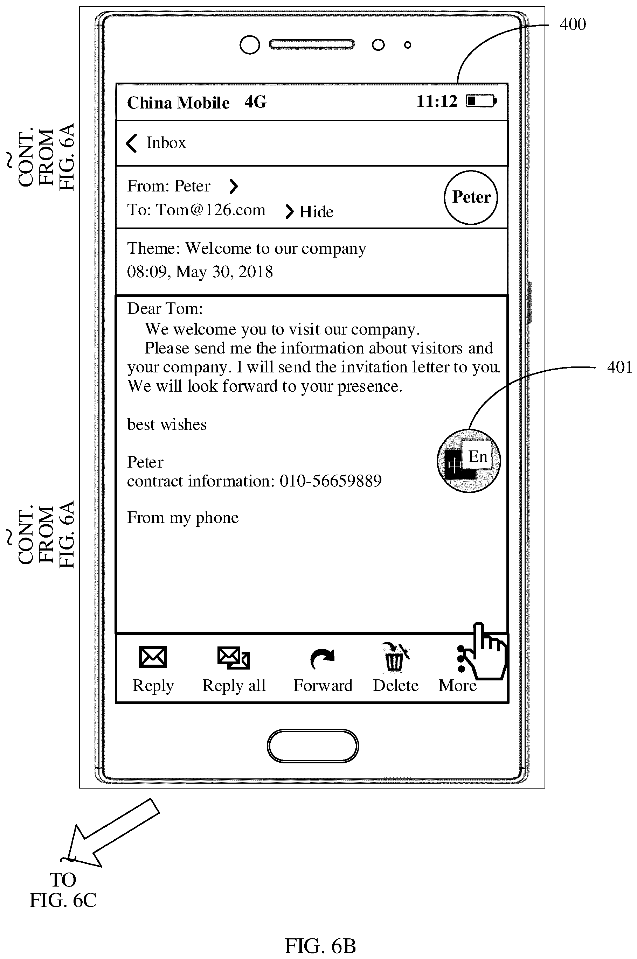

In some other embodiments, for ease of closing the email translation area, as shown in FIG. 6A, the email translation area 411 included in the user interface 410 further includes a setting bar 603, and a close button 602 is provided in the setting bar 603. In response to an operation on the close button 602, the electronic device 100 may hide the email translation area 411, and may display the user interface 400 on the touchscreen 150. The user interface 400 may include a suspend button 401. In this embodiment of this application, the close button 602 may be a character such as "×", may be an identifier or the like, or may be "close". This is not limited in this embodiment of this application.

In some other embodiments, the language of the translation result may alternatively be a language that is recorded by the electronic device 100 and that is set for previous email translation. For example, if the language that is recorded by the electronic device 100 and that is set for the previous email translation is French, the language used for the translation result is French.

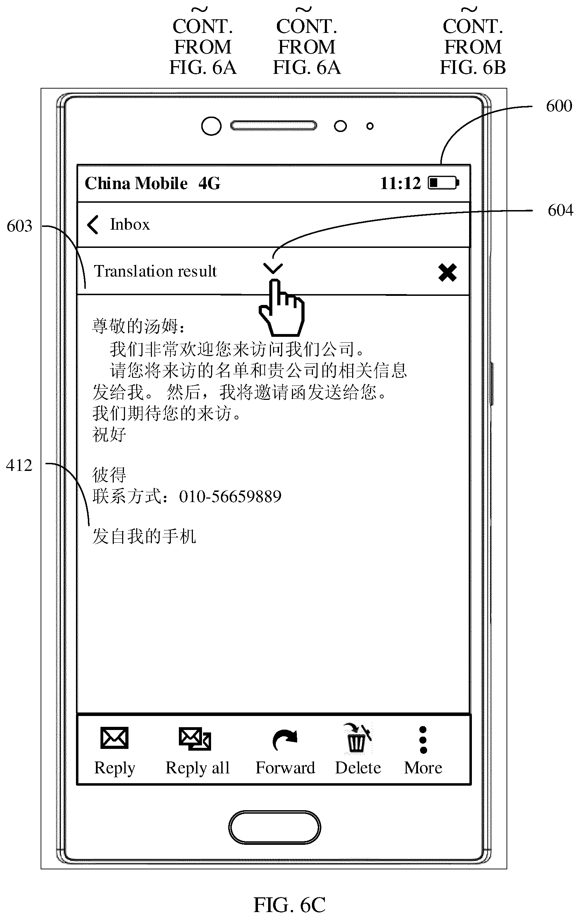

In addition, for ease of viewing the translation result by the user, in some embodiments, as shown in FIG. 6A, a pull-up button 601 may alternatively be provided in the setting bar 603. If detecting a touch operation on the pull-up button 601, the electronic device 100 may display the email translation area 411 on the touchscreen 150 in response to the operation. For example, the user interface on which the email translation area 411 may be displayed in full screen may be a user interface 600 shown in FIG. 6C. Because the user interface 600 displays the translation result in full screen, it is conducive to view by the user. Moreover, for ease of making the user interface 600 return to the user interface 410, in response to the operation on the pull-up button 601, the pull-up button 601 may further be hidden from the setting bar 603 and a pull-down button 604 is displayed in the setting bar 603, while the email translation area 411 is displayed in full screen on the touchscreen 150. The electronic device 100 may exit full screen display of the email translation area 411, in response to a touch operation on the pull-down button 604. For example, the electronic device 100 may display the user interface 410 on the touchscreen 150, in response to the touch operation on the pull-down button 604. It should be noted that both the pull-up button 601 and the pull-down button 604 in this embodiment of this application may be displayed on the user interface 410 and the user interface 600. For example, both the pull-up button 601 and the pull-down button 604 are displayed on the user interface 410; or the pull-up button 601 may be displayed on the user interface 410, and the pull-down button 604 may be displayed on the user interface 600. This is not limited.

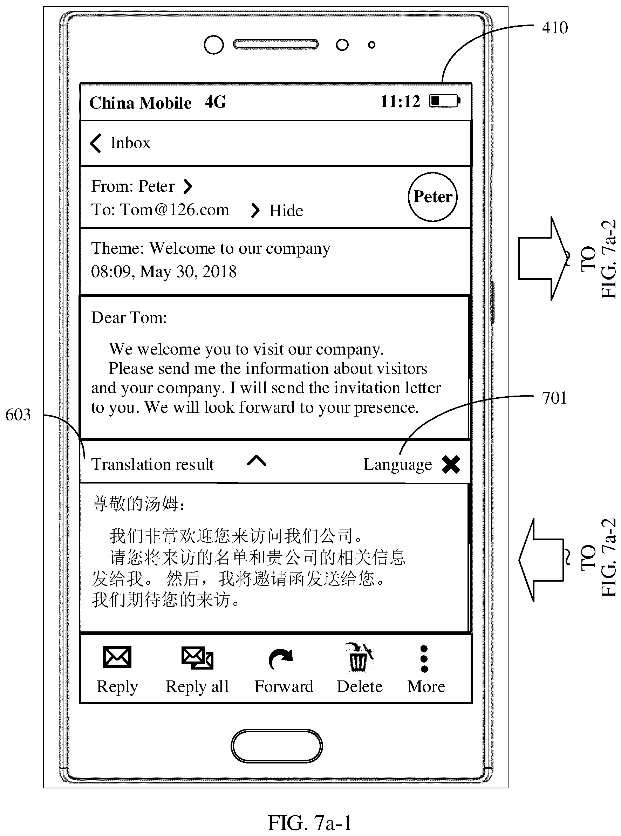

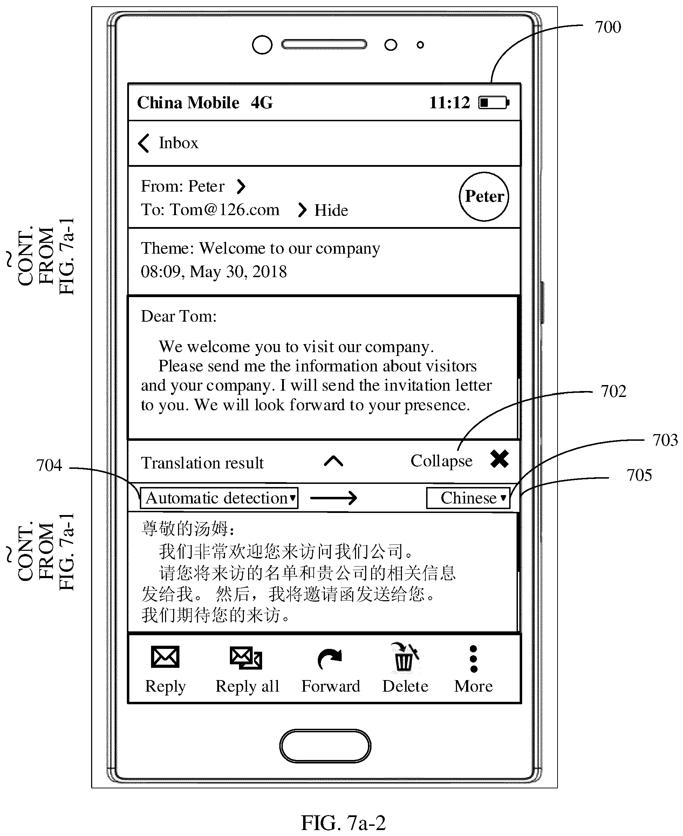

To improve translation flexibility, in some other embodiments, as shown in FIG. 7a-1, a language button 701 may further be provided in the setting bar 603. If detecting an operation on the language button 701, the electronic device 100 adds a language setting bar 705 to the user interface 410. The language setting bar 705 includes a source language setting button 704 and a target language setting button 703. The source language setting button 704 is used to set a language of to-be-translated content, and the target language setting button 703 is used to set a translated language of the to-be-translated content. For example, a user interface to which the language setting bar 705 has been added may be a user interface 700 shown in FIG. 7a-2. It can be understood that, if detecting the operation on the language button 701, the electronic device 100 may display the user interface 700 on the touchscreen 150 in response to the operation. The user may change a language of a translation result by using the target language setting button 703. For example, if detecting an operation on the target language setting button 703, the electronic device 100 may display a target-language list on the touchscreen 150 in response to the operation on the target language setting button 703. A target-language list 720 shown in FIG. 7b is used as an example. The user may perform selection from languages included in the target-language list 720. For example, if the user selects French from the target-language list 720, email body content is translated into French in response to an operation of the user for selecting French, so that the language of the translation result displayed in the touchscreen 150 is French. The source language setting button 704 is used to indicate a language used for the email body content. For example, if the language used for the email body content is English, "English" may also be displayed on the source language setting button 704. For another example, if the language used for the email body content is Chinese, "Chinese" may also be displayed on the source language setting button 704. It should be noted that in some embodiments, when the email body content includes both Chinese and English, if the electronic device 100 automatically sets a language to English by using the source language setting button 704, content in English in the email body content is automatically translated into a language that is set by using the target language setting button. For another example, when the email body content includes both French and English, if the electronic device 100 automatically sets a source language to English and the user is familiar with English but is unfamiliar with French, the user may perform an operation on the source language setting button 704, to display a language list corresponding to the email body content. The user may select French from the language list corresponding to the email body content, so that English that is automatically set by using the source language setting button 704 is changed to French, and content in French in the email body content can be translated into a language (for example, a target language is English) that is set by using the target language setting button 703. This improves email viewing efficiency of the user.

Specifically, in some embodiments, the electronic device 100 may determine, by detecting a language included in an email body, the language list corresponding to the email body content. For example, if the email body content includes English and Chinese, the language list corresponding to the email body content includes English and Chinese. For another example, if the email body content includes Japanese, Korean, and English, the language list corresponding to the email body content includes Japanese, Korean, and English.

In addition, in some embodiments, the target-language list 720 may include languages supported by the electronic device 100, or may include languages supported by the cloud server. For example, when the electronic device 100 translates the email body content, if the electronic device 100 supports English, Chinese, French, German, Russian, and Korean, the target-language list 720 includes English, Chinese, French, German, Russian, and Korean. For another example, when the electronic device 100 uploads the email body content to the cloud server for translation, if the cloud server supports English, Chinese, Japanese, German, and Latin, the target-language list 720 includes English, Chinese, Japanese, German, and Latin. In some embodiments, the electronic device 100 may upload, to the cloud server by using an artificial intelligence translation engine, the email body and the language that is set by using the target language setting button. Moreover, to ensure that the user knows an uploading prompt, before uploading, to the cloud server, the email body and the language that is set by using the target language setting button, the electronic device 100 may further prompt the user to determine whether to agree to upload of the email body to the cloud server. The user may be prompted to determine whether to agree to upload of the email body to the cloud server, by displaying a dialog box on the touchscreen 150 or in another manner.

For ease of collapsing the language setting bar 705, in some embodiments, when the language setting bar 705 is displayed, the electronic device 100 may further hide the language setting bar 705 in response to an operation on the language button 701. Moreover, for ease of finding, by the user, a button used for collapsing the language setting bar 705, in some embodiments, in response to an operation on the language button 701, the electronic device 100 may hide the language button 701 from the setting bar 603 and display a collapse button 702 in the setting bar 603, in addition to adding the language setting bar 705 to the user interface 410. In response to an operation on the collapse button 702, the electronic device may hide the language setting bar 705, display the language button 701 in the setting bar 603, and hide the collapse button 702 from the setting bar 603, that is, display the user interface 410 on the touchscreen 150, as shown in FIG. 7a-1. For ease of identifying the collapse button 702 by the user, the collapse button 702 may be named collapse. Certainly, the collapse button 702 may alternatively have another name. Any button that can be used to hide the language setting bar 705 can be understood as the collapse button 702.

For ease of performing an operation by the user, in some other embodiments, as shown in FIG. 8, the electronic device 100 may display a shortcut menu 800 on the touchscreen 150 in response to a hard press operation of the user on the suspend button 401. The shortcut menu 800 includes a source language setting button 801 and a target language setting button 802. When the email body content includes two or more languages, the user may modify, by performing an operation on the source language setting button 801, an email text part that needs to be translated. For a specific implementation, refer to the description in the foregoing embodiment about modifying, by using the source language setting button 704, an email text part that needs to be translated. The user may change, by performing an operation on the target language setting button 802, a required translated language of the email body content. For a specific implementation, refer to the description in the foregoing embodiment about changing a required translated language of the email body content by using the target language setting button 703. Details are not described herein again. In addition, the suspend button 401 in this embodiment of this application may be related to languages that are set by using the source language setting button and the target language setting button. For example, if a language is set to English by using the source language setting button 801 and a language is set to Chinese by using the target language setting button 802, the suspend button 401 may be represented as a suspend button shown in FIG. 8. When a language is set to French by using the source language setting button 801 and a language is set to English by using the target language setting button 802, the suspend button may be represented in a form shown in FIG. 9. It should be noted that the suspend button in this embodiment of this application may alternatively not be related to languages that are indicated by the source language setting button 801 and the target language setting button 802. Regardless of languages indicated by the source language setting button 801 and the target language setting button 802, suspend controls may be represented in a same form. This is not limited in this embodiment of this application.

As shown in FIG. 10, to indicate a function of the suspend button 401 to the user, in some other embodiments, in response to the touch operation on the area 304 in the email list 302, the electronic device 100 may further display a prompt box 1000 on the touchscreen 150 when the email corresponding to the area 304 is opened. The prompt box 1000 includes prompt information, and the prompt information is used to indicate that the suspend button may be used for translating email content. For example, the prompt information may be "If an email needs to be translated, please tap the suspend control", may be "Tap the button to translate an email", or may be "Tap here for email translation". The prompt box 1000 may be hidden after being displayed on the touchscreen 150 for preset duration, or a prompt box 1000 may be hidden from the touchscreen 150 after a touch operation on an "Ok" control is detected. For example, the preset duration may be 20 seconds or 30 seconds. A manner of hiding the prompt box 1000 is not limited in this embodiment of this application.

It can be understood that, the prompt box 1000 may be displayed when the user opens an email for the first time to view the email, where the prompt box 1000 includes the prompt information, and the prompt information is used to prompt translation of email content. Certainly, the prompt box 1000 may alternatively be displayed when an email is written for the first time. Alternatively, the prompt box 1000 may be displayed any time when an email is viewed or an email is written.

During specific implementation, when the electronic device 100 detects that the user interface for viewing an email (for example, an operation for viewing an email in the inbox) is opened for the first time, or that the user interface for writing an email is opened for the first time, the electronic device 100 may display the prompt box on a user interface illustrating email content details. For example, if the operation on the area 304 is an operation for viewing an email in the inbox for the first time, the prompt box 1000 is displayed on the user interface illustrating email content details. When the electronic device 100 detects an operation on the area 304 again or detects an operation on an area in which another email in the email list 302 is located, in response to the operation, the electronic device 100 displays, on the touchscreen 150, a corresponding user interface illustrating email content details. In this case, the prompt box 1000 may not be displayed any more.

For another example, in response to detection of the operation on the area 304, the electronic device 100 may further determine whether a language used for a body of the email with the email subject "Welcome to our company" sent by the sender Peter is the same as the system language. If the language used for the email body is different from the system language, the user interface illustrating email content details about the email with the email subject "Welcome to our company" sent by the sender Peter is displayed on the touchscreen 150, and the prompt box 1000 is displayed on the user interface illustrating email content details. For example, as shown in FIG. 10, if the language used for the email body is the same as the system language, the prompt box 1000 may be hidden.

Specifically, in this embodiment of this application, the electronic device 100 may determine whether the language used for the email body is the same as the system language. Alternatively, the electronic device 100 may send the email body to the cloud server; the cloud server may determine the language used for the email body, and then send the language used for the email body to the electronic device 100; and the electronic device 100 may determine whether the language used for the email body is the same as the system language. Alternatively, the electronic device 100 may send the email body and the system language to the cloud server; and the cloud server may determine whether the language used for the email body is the same as the system language, and then return a determining result to the electronic device 100.

For example, when the electronic device 100 needs to use the cloud server to determine whether the language used for the email body is the same as the system language, the electronic device 100 may send the email body to the cloud server by using the artificial intelligence translation engine. For another example, the electronic device 100 may alternatively send the email body and the system language to the cloud server by using the artificial intelligence translation engine; and the cloud server 304 may determine whether a language type of a body of the email indicated by a control 304 is consistent with a type of the system language, and then send a determining result to the electronic device 100. If the language used for the email body is inconsistent with the system language, the prompt box 1000 is displayed on the user interface of the electronic device.

Because the email body content needs to be reported to the cloud server, to ensure that the user knows a reporting prompt, in some embodiments, the electronic device 100 may further display a dialog box on the user interface illustrating email content details, in response to the operation on the area 304, where the dialog box includes information used to prompt the user to determine whether to agree to report the email body content to the cloud server. A dialog box 1100 shown in FIG. 11 is used as an example. The dialog box 1100 includes an approval button 1101 and a rejection button 1102. The approval button 1101 is used to indicate that the user agrees to send the email body content to the cloud server, and the rejection button 1102 is used to indicate that the user rejects sending of the email body content to the cloud server. If detecting an operation on the approval button 1101, the electronic device 100 uploads the email body to the cloud server in response to the operation. If detecting an operation on the rejection button 1102, the electronic device 100 does not upload the email body to the cloud server. In some embodiments, the dialog box 1100 may further include prompt information indicating that "If a user has not performed an operation when a preset duration expires, it is considered by default that the user agrees to upload email body to the cloud server". The preset duration may be 10s, or may be 5s, 15s, or the like. It should be noted that the dialog box 1100 may be referred to as a prompt box 1100. This is not limited in this embodiment of this application. It should also be noted that in some embodiments, the dialog box 1100 may alternatively not include a rejection button 1102, but includes information used to prompt the user to determine whether to agree to report the email body content to the cloud server, and the approval button 1101. In this case, if detecting an operation on the approval button 1101, the electronic device 100 uploads the email body to the cloud server in response to the operation. If the electronic device 100 has not detected an operation of the user on the approval button 1101 when preset duration (for example, 10s or 5s) expires, it is considered by default that the user rejects sending of the email body content to the cloud server.

It should also be noted that, the user interface 410 shown in FIG. 4B, the user interface 600 shown in FIG. 6C, and the user interface 700 shown in FIG. 7a-2 and FIG. 7b may include the suspend button 401, or may not include the suspend button 401. This is not limited in this embodiment of this application.

The foregoing uses the user interface for viewing a received email as an example for describing the email translation method in this embodiment of this application in detail. The electronic device 100 may further display, on the touchscreen 150, the user interface for writing an email, in response to a user operation, where the user interface for writing an email may include a suspend button and an email writing area, and the email writing area includes content written by a user. If detecting an operation on the suspend button, the electronic device 100 adds an email translation area to the user interface for writing an email, where the email translation area includes a result preview area, and the result preview area includes a translation result of the content written by the user. It can be understood that, if detecting the operation on the suspend button, the electronic device 100 displays, on the touchscreen 150, a user interface including the translation result of an email content written by the user. It can be understood that, for ease of performing an operation by the user, the electronic device may insert the translation result into the email writing area or replace the written content with the translation result in the email writing area, in response to the user operation. In this embodiment of this application, a function bar may further be provided in the email translation area, where the function bar includes at least one of a replacement button and an insertion button. The electronic device may replace the content written by the user in the email writing area with the translation result in response to an operation on the replacement button, or the electronic device may add the translation result to the email writing area in response to an operation on the insertion button.

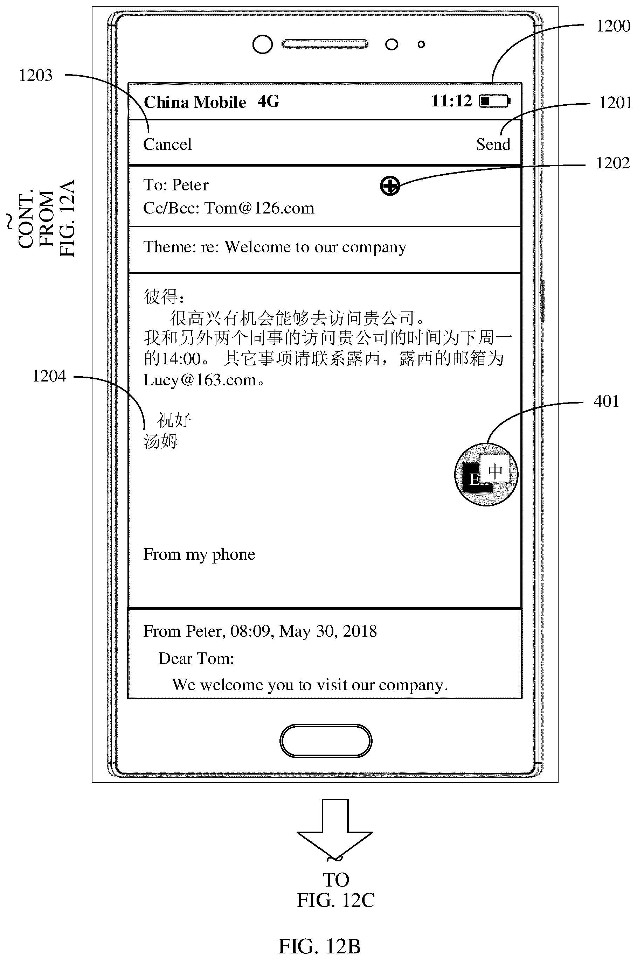

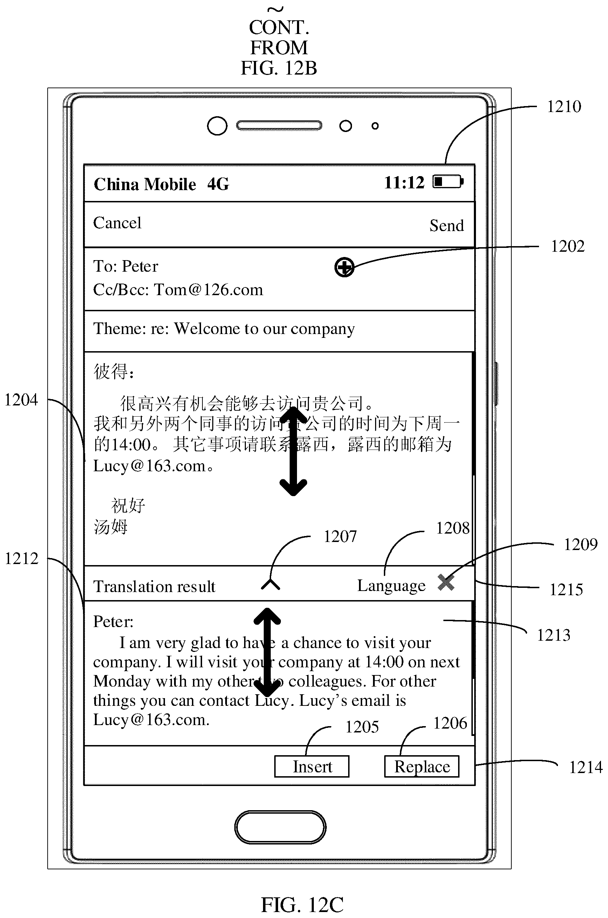

For example, as shown in FIG. 12A, the electronic device 100 displays the user interface 400 on the touchscreen 150. The user interface 400 displays an email sent by a sender (for example, the sender is Peter), where a language of email body content is English. Then, if detecting a touch operation on a replay button 1213, the electronic device 100 displays, on the touchscreen 150 in response to the operation, a user interface for replying to the email with the subject "Welcome to our company" sent by the sender Peter. For example, if a language with which the user is familiar is Chinese, after the user has written an email in Chinese to be replied to Peter, the user interface for replying to the email with the subject "Welcome to our company" is shown as a user interface 1200 in FIG. 12B. The user interface 1200 includes a suspend button 401 and an email writing area 1204, where the email writing area 1204 includes content written by the user in Chinese. In addition, the user interface 1200 may further include at least one of the following controls: a button 1201 for email sending, a button 1203 for canceling email reply, a button 1202 for adding a new recipient, and the like. If detecting an operation on the suspend button 401, the electronic device 100 adds an email translation area 1212 to the user interface 1200 in response to the operation, where the email translation area 1212 includes a result preview area 1213 and a function bar 1214. The result preview area 1213 includes a translation result of the content that is written by the user in Chinese and that is included in the email writing area 1204. The function bar 1214 includes at least one of an insertion button 1205 and a replacement button 1206. It can be understood that, a user interface after the email translation area 1212 is added to the user interface 1200 may be a user interface 1210 shown in FIG. 12C. For example, to simplify the user operation, the electronic device 100 automatically sets a language to English by using a target language setting button, based on the language, which is English, used for the body of the email with the subject "Welcome to our company" sent by the sender Peter. In this case, if detecting an operation on the suspend button 401, the electronic device 100 displays the translation result in the result preview area 1213 in English in response to the operation. It should be understood that the user may alternatively set a target language by performing an operation on the target language setting button.

The user interface 1210 shown in FIG. 12C is used as an example. The email translation area 1212 further includes the function bar 1214, and the function bar includes the at least one of the insertion button 1205 and the replacement button 1206. Therefore, in response to an operation on the replacement button 1206, the electronic device 100 may replace the content written by the user included in the email writing area 1204 with the translation result, and display the translation result in the email writing area 1204. This may be shown as a user interface 1300 in FIG. 13. This facilitates the user operation, and improves email writing efficiency. In some embodiments, the electronic device 100 may alternatively hide the email translation area 1212 in response to an operation on the replacement button 1206. For example, a user interface on which the translation result has been displayed in the email translation area 1212 and the email translation area 1204 has been hidden may be a user interface 1300 shown in FIG. 13.

Further, to ensure accuracy of the email content obtained after the replacement, the user may modify content on the user interface 1300 obtained after the replacement or modify the content in the result preview area 1213. It should be noted that, for ease of learning about a function of the replacement button 1206 by the user, in some embodiments, the replacement button 1206 may be named "replace" to indicate the function of the replacement button 1206 to the user; or the replacement button 1206 may be set to a symbol or an identifier used for indicating replacement, to indicate the function of the replacement button 1206 to the user.

In addition, in some other embodiments, as shown in FIG. 12C, when the function bar 1214 further includes the insertion button 1205, in response to an operation on the insertion button 1205, the electronic device 100 may add the translation result to the email writing area 1204, and display the content written by the user and the translation result. This is shown as, for example, a user interface 1400 in FIG. 14. In some other embodiments, the email translation area 1212 may alternatively be hidden. For example, a user interface after the translation result is added to the email writing area 1204 may be the user interface 1400 shown in FIG. 14. The user interface 1400 may include an area 1401 and an area 1402, where the area 1401 includes the content written by the user, and the area 1402 is the translation result. It should be noted that, in FIG. 14, the content written by the user may be located before the translation result, or the content written by the user may be located after the translation result. This is not limited. For ease of learning about a function of the insertion button 1205 by the user, the insertion button 1205 may be set to "insert", the insertion button 1205 may be set to "copy" or the like, or the insertion button 1205 may be set to a symbol or an identifier used for indicating copying or insertion. This is not limited.

It should be understood that, for ease of performing an operation by the user, the user interface 1210 may further include a setting bar 1215. The setting bar 1215 may be provided with at least one of a pull-up button 1207, a language button 1208, and a close button 1209. For functions of the pull-up button 1207, the language button 1208, and the close button 1209, refer to related descriptions of the pull-up button 601, the language button 701, and the close button 602. Details are not described herein again.

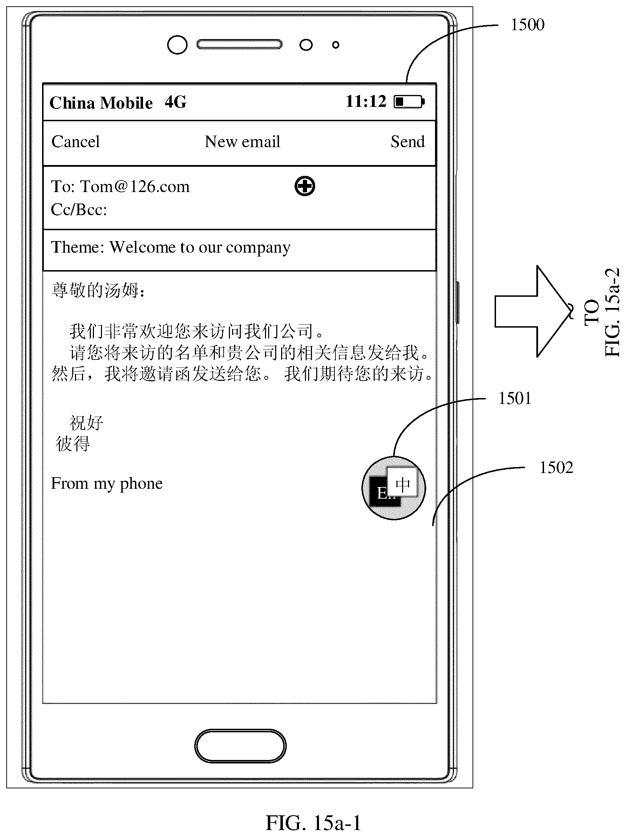

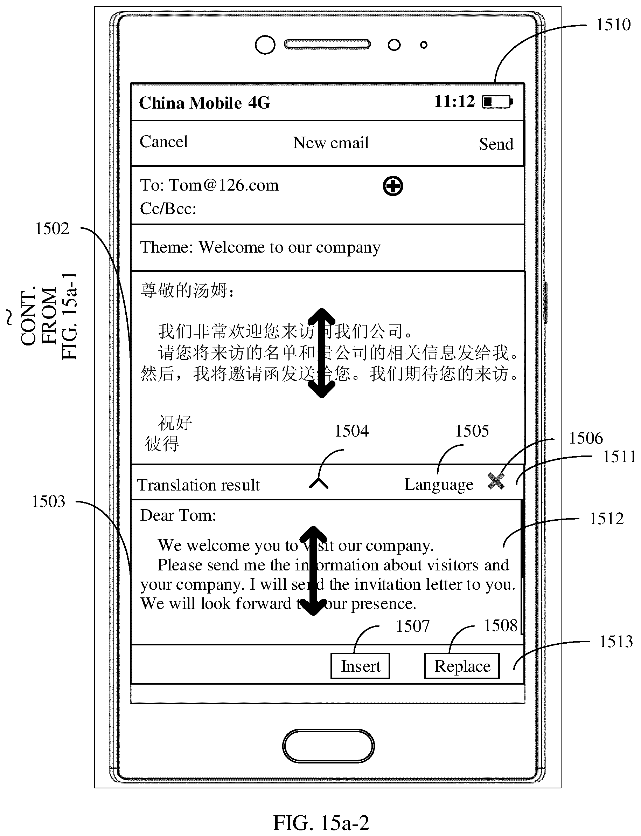

For another example, as shown in FIG. 15a-1, the electronic device 100 displays a user interface 1500 on the touchscreen 150. The user interface 1500 includes an email writing area 1502 and a suspend button 1501, where the email writing area 1502 includes content written by a user in Chinese. The electronic device 100 may add an email translation area 1503 to the user interface 1500 in response to an operation on the suspend button 1501. The email translation area 1503 includes a result preview area 1512 and a function bar 1513. The result preview area 1512 includes a translation result of the content written by the user in Chinese. The function bar 1513 includes at least one of an insertion button 1507 and a replacement button 1508. In addition, for ease of performing an operation by the user, in some embodiments, the email translation area 1503 further includes a setting bar 1511. The setting bar 1511 includes at least one of a pull-up button 1504, a language button 1505, and a close button 1506. For example, a user interface after the email translation area 1503 is added to the user interface 1500 may be shown as a user interface 1510 in FIG. 15a-2. It should be noted that, for functions of the pull-up button 1504, the language button 1505, the close button 1506, the insertion button 1507, and the replacement button 1508, reference may be made to the functions of the pull-up button 1207, the language button 1208, the close button 1209, the insertion button 1205, and the replacement button 1206. Details are not described herein again.

In some embodiments, to avoid misoperations performed by the user, as shown in FIG. 15b, the electronic device 100 may further pop up a prompt box 1520 in response to an operation on the replacement button 1508. The prompt box 1520 includes prompt information and an approval button 1521, where the prompt information is used to prompt the user to determine whether to replace the content written by the user with the translation result. In response to an operation on the approval button 1521, the electronic device may replace the content written by the user in the email writing area 1502 with the translation result in the result preview area 1512, display the translation result in the email writing area 1502, and further hide the email translation area 1503. The prompt box 1520 may further include a rejection button 1522. If detecting an operation on the rejection button 1522, in response to the operation, the electronic device 100 rejects replacement of the content written by the user in the email writing area 1502 with the translation result in the result preview area 1512, In addition, in some embodiments, preset duration such as 10s may further be set. If detecting that no operation has been performed on the approval button 1521 when 10s expires, the electronic device 100 may consider by default that the user agrees to replace the content written by the user with the translation result, or may consider by default that the user rejects replacement of the content written by the user with the translation result.

Moreover, in response to a user operation, the electronic device 100 may further display the user interface for email forwarding, where the user interface for email forwarding includes an email writing area and a suspend button. When the electronic device 100 detects an operation on the suspend button on the user interface for email forwarding, for a specific implementation in which the electronic device 100 responds to the operation, reference may be made to the foregoing implementation in which the electronic device 100 responds to the operation on the suspend button on the user interface for email reply.

It should also be noted that, the foregoing describes only translation of an email body, and the electronic device 100 may further translate an email subject, in response to the operation on the suspend button. Then, the translation result includes a translation result of the subject.

In addition, it should also be noted that, after the email has been written by using a familiar language on the user interface for writing an email and the content written by the user has been translated by using an existing technology, the electronic device 100 may further display at least one of the insertion button and the replacement button while displaying the translation result on the touchscreen 150, so that the user directly adds the translation result to the email body without a need to copy the translation result.

The user interface 700 shown in FIG. 7 is used as an example. In an embodiment of this application, if the cloud server is used to translate an email body and/or an email subject, the electronic device 100 may obtain, based on a method shown in FIG. 16, a language supported by the cloud server, to generate a target-language list. FIG. 16 shows a method for obtaining, by the electronic device, the language supported by the cloud server. The method includes the following steps:
Step 1601: An email client of the electronic device 100 receives an operation for opening the email client. For example, the operation for opening the email client may be a touch operation on an email icon, or may be a quick gesture operation for opening an email. This is not limited.
Step 1602: The electronic device 100 sends an initialization request to an AI translation engine (artificial intelligence translation engine) by using the email client.
Step 1603. After receiving the initialization request, the AI translation engine performs service binding with the email client. Service binding may be: The AI translation engine may send related information of the email client (for example, email content written by a user) to the cloud server, and the cloud server may also deliver related information of the email client (for example, a translation result of the email content written by the user) to an AT translation engine.
Step 1604: The email client of the electronic device 100 sends a request of obtaining the language supported by the cloud server to the cloud server by using the AI translation engine.
Step 1605. After receiving the request sent by the electronic device 100, the cloud server returns the language supported by the cloud server to the email client of the electronic device 100 based on the request by using the AI translation engine.
Step 1606: After receiving the language supported by the cloud server, the email client of the electronic device 100 generates a target-language list based on the language supported by the cloud server, where the target-language list includes the language supported by the cloud server.

In addition, the electronic device 100 may further obtain the language supported by the cloud server from the cloud server, in response to an operation for opening an inbox or outbox or an operation on a suspend button. A manner of triggering obtaining of the language supported by the cloud server is not limited in this embodiment of this application.

In this embodiment of this application, when the electronic device 100 detects an operation on the suspend button on the user interface 400 shown in FIG. 4A, in some embodiments, a method shown in FIG. 17A and FIG. 17B may be used to display, in response to the operation on the suspend button, a user interface including a translation result.

Specifically, as shown in FIG. 17A and FIG. 17B, the method for displaying the user interface including a translation result in this embodiment of this application includes the following steps.

Step 1701: An email client of the electronic device 100 receives an operation of a user for opening an email in an inbox. For example, the operation for opening an email in the inbox may be touching an area in which an email in the email list shown in FIG. 3 is located.

Step 1702: The email client of the electronic device 100 sends a language detection request to a cloud server by using an AI translation engine, where the language detection request includes email content that needs to be translated (for example, an email body and an email subject).

Step 1703: After receiving the language detection request, the cloud server determines a language used for the email content that needs to be translated, and sends, to the email client by using the AI translation engine, the language used for the email content that needs to be translated.

Step 1704: After receiving the language used for the email content that needs to be translated, the email client of the electronic device 100 compares the language used for the email content that needs to be translated with a system language, and determines that the language used for the email content that needs to be translated is different from the system language.

Step 1705: The email client of the electronic device 100 displays a prompt box on a touchscreen 150, where the prompt box includes information used to indicate a function of the suspend button to the user. For example, the information used to indicate the function of the suspend button to the user may be "Tap the button to translate an email" or "If an email needs to be translated, please tap here".

Step 1706: The email client of the electronic device 100 receives an operation of the user on the suspend button.

Step 1707: The email client of the electronic device 100 determines that the email content needs to be translated into a target language.

Step 1708: The email client of the electronic device 100 sends a translation request to the cloud server by using the AI translation engine, where the translation request includes the target language.

Step 1709: After receiving the translation request, the cloud server translates, based on the target language included in the translation request, the email content that needs to be translated, to obtain a translation result; and returns the translation result to the email client by using the AI translation engine.

Step 1710: After receiving the translation result, the email client of the electronic device 100 displays, on the touchscreen 150, the user interface including the translation result. For ease of view by the user, a paragraph of the to-be-translated content may be in one-to-one correspondence to a paragraph of the translation result.

It can be understood that in this method, the electronic device may perform step 1701 to step 1704 and step 1706 to step 1710, and does not perform step 1705.

It should be noted that the user may further modify, copy, analyze, select-all, hide, or perform other operations on the translation result. For example, a modification button, a copy button, an analysis button, a select-all button, and/or a hide button may be added. In response to an operation on a button, the user may modify, copy, analyze, select-all, and/or hide the translation result.

In this embodiment of this application, when the electronic device 100 detects an operation on the suspend control on the user interface 1200 shown in FIG. 12B, in some embodiments, a method shown in FIG. 18 may be used to display, in response to the operation on the suspend control, a user interface including a translation result.

Specifically, as shown in FIG. 18, another method for displaying the user interface including a translation result in this embodiment of this application includes the following steps.

Step 1801: An email client of the electronic device 100 receives an operation for displaying a user interface for writing an email, where the user interface for writing an email may be a user interface for email reply, a user interface for email forwarding, a user interface for writing a new email, or the like.

Step 1802: The email client of the electronic device 100 obtains an email body and/or an email subject that are/is entered by a user on the user interface.

Step 1803: The email client of the electronic device 100 receives an operation on the suspend button.

Step 1804: The email client of the electronic device 100 determines to translate the email body and/or the email subject into a target language.

Step 1805: The email client of the electronic device 100 sends a translation request to a cloud server by using an AI translation engine, where the translation request includes the email body and/or the email subject that need/needs to be translated, and the target language.

Step 1806: After receiving the translation request, the cloud server translates, into the target language, the email body and/or the email subject that need/needs to be translated, to obtain a translation result; and returns the translation result to the email client by using the AI translation engine.

Step 1807: After receiving the translation result, the email client of the electronic device 100 displays, on a touchscreen 150, the user interface including the translation result.

It should be noted that the user may select-all, modify, share, or perform other operations on the translation result.

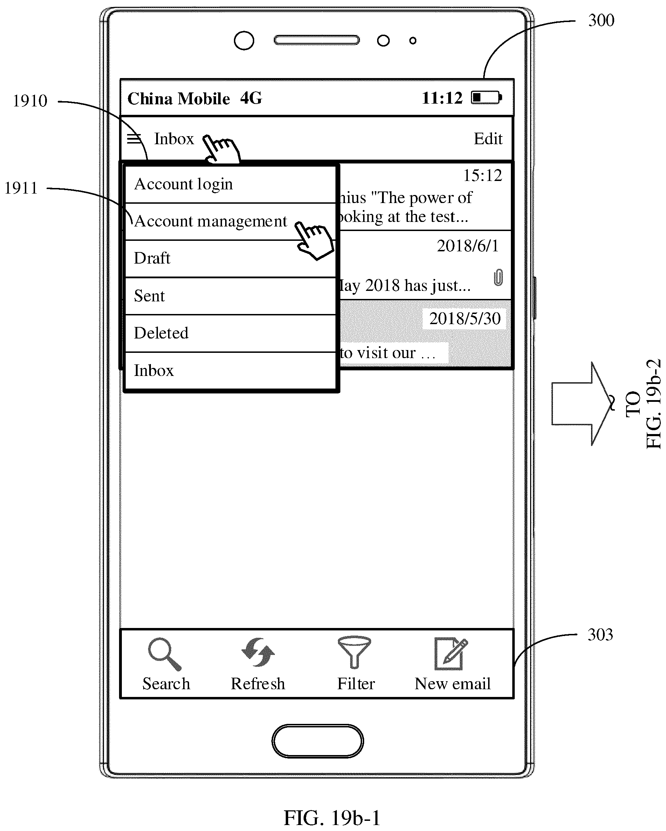

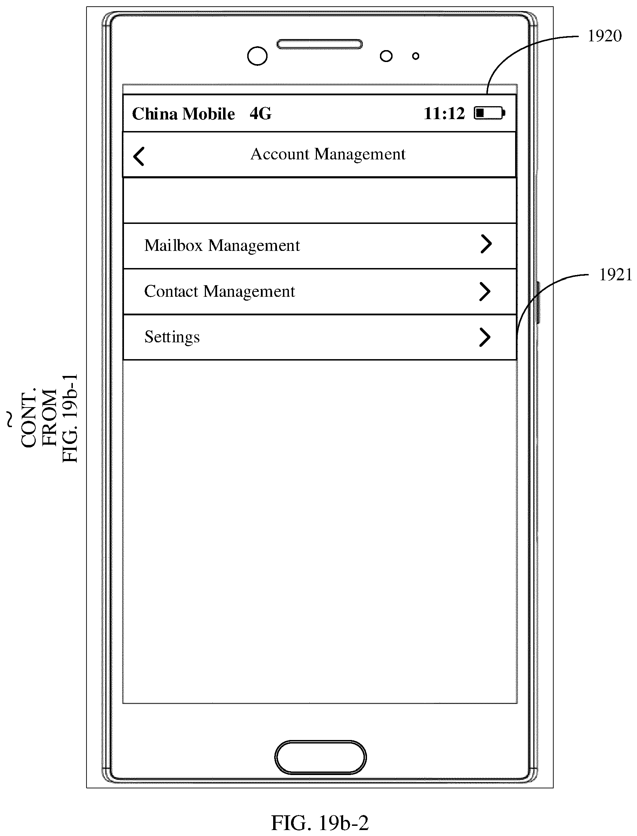

In addition, a control for determining whether to display a suspend button may further be added to an email setting screen in the embodiments of this application, so that a user can set, depending on a requirement of the user, whether to display the suspend button on a user interface for viewing or writing an email. For example, as shown in FIG. 19a, an email setting screen 1900 includes a button 1901 used for enabling or disabling a function of displaying the suspend button. It should be noted that the email setting screen 1900 may be a setting screen of email. For example, the electronic device 100 may display a shortcut menu 1910 on the touchscreen 150 in response to a touch operation on the inbox, where the shortcut menu 1910 includes account management 1911, as shown in FIG. 19b-1. In some other embodiments, the shortcut menu 1910 may further include "account login", "draft box", "sent", "deleted", "inbox", and other buttons. A quantity and functions of buttons included in the shortcut menu 1910 are not limited in this embodiment of this application. The electronic device 100 may display a user interface 1920 on the touchscreen 150 in response to an operation of the user on the account management 1911 (for example, tapping the account management 1911). The user interface 1920 includes a setting button 1921. Moreover, the user interface may further include an email management button, a contact management button, and the like. The electronic device 100 may display the email setting screen 1900 in response to an operation on the setting button 1921, as shown in FIG. 19a. It can be understood that the email setting screen 1900 may alternatively be an email-specific setting screen on a system setting screen. For example, as shown in FIG. 19c-1 and FIG. 19c-2, the electronic device 100 may display the system setting screen 510 on the touchscreen 150 in response to an operation on the setting icon. Then, the electronic device 100 may display a user interface 1940 on the touchscreen 150 in response to an operation on a button 1930 used for applications and notifications included on the system setting screen 510. The user interface 1940 includes a button 1941 used for email setting. Furthermore, the user interface 1940 may further include buttons for setting other applications (such as WeChat, settings, and camera) installed on the electronic device 100. The electronic device 100 may display the email setting screen 1900 on the touchscreen 150 in response to a touch operation on the button 1941 used for email setting.

Moreover, languages included in a target-language list may further be a set of languages supported both by the electronic device 100 and the cloud server. For example, both the electronic device 100 and the cloud server can support a specific language (for example, English) in the target-language list. Therefore, content of an email body and/or an email subject may be translated on the electronic device 100, or content of an email body and/or an email subject may be translated on the cloud server. In this case, the user may perform corresponding setting on priorities of emails. For example, an email translation location button, for example, a button 1903 and a button 1902, may be added to the email setting screen 1900. For example, as shown in FIG. 19a, if the button 1902 is selected, the electronic device 100 preferentially transmits an email on the cloud server.

The foregoing embodiments in the embodiments of this application may be used in combination.

In the embodiments provided in this application, the methods provided in the embodiments of this application are described from a perspective of the electronic device that serves as an execution body.

FIG. 20 shows an electronic device 2000 according to this application. For example, the electronic device 2000 includes at least one processor 2010, a memory 2020, and a touchscreen 2030. The processor 2010, the memory 2020, and the touchscreen 2030 are coupled to each other. Coupling in this embodiment of this application may be a communication connection, or may be in an electrical form or another form.

Specifically, the memory 2020 is configured to store a program instruction.

The touchscreen 2030 is configured to display a user interface.

The processor 2010 is configured to invoke the program instruction stored in the memory 2020, so that the electronic device 2000 is enabled to perform the steps performed by the electronic device in the email translation methods provided in the embodiments of this application. It should be understood that the electronic device 2000 may be configured to implement the email translation methods in the embodiments of this application. For related features, refer to the foregoing descriptions. Details are not described herein again.

In possible implementation, the displaying mentioned above may be implemented by using a display screen. The display screen has a displaying function, and the display screen may have a touch function or may not have a touch function. An operation on a touchscreen may be implemented by using a virtual key, or may be implemented by tapping a touchscreen. An operation on a non-touchscreen may be implemented by using a physical key.

It can be understood that the foregoing embodiments use email as an example for description, and can also be applied to translation of a variety of content. For example, if a user enters Chinese on a search page of a browser, the search page displays a suspend button; and in response to an operation of the user for tapping the suspend button, the entered Chinese can be translated into English. In this way, information related to English can be searched for. For another example, when a user enables chat software, a user interface of the chat software displays English written by the user, and the user interface of the chat software displays a suspend button; and in response to an operation of the user for tapping the suspend button. English can be translated into Chinese. For specific descriptions, refer to the descriptions in the foregoing embodiments.

A person skilled in the art can clearly understand that the embodiments of this application may be implemented by hardware, or may be implemented by a combination of hardware and software. When it is implemented by using software, code that implements the foregoing functions may be stored in a computer-readable medium.

## Claims

1. An email translation method, wherein the method comprises:
displaying a first user interface (1500), wherein the first user interface comprises an email writing area (1502) and a suspend button (1501), and the email writing area comprises content written by a user;
in response to a translation operation of the user on the written content, adding a first email translation area (1503) to the first user interface, wherein the in response to a translation operation of the user on the written content comprises: in response to an operation of the user on the suspend button, the first email translation area comprises a first result preview area (1512) and a function bar (1513), the first result preview area comprises a translation result of the content written by the user, wherein the content written by the user is content of an email body and an email subject, the function bar comprises a replacement button (1508);
receiving (Step 1803), by an email client of an electronic device (100), the operation of the user on the suspend button; determining (Step 1804), by the email client of the electronic device, to translate the email body and/or the email subject;
in response to an operation of the user on the replacement button, replacing the content written by the user comprised in the email writing area with the translation result, and displaying the translation result in the email writing area; and
allowing the user to modify the translation result in the email writing area.

2. The method according to claim 1, wherein the in response to an operation of the user on the replacement button, replacing the content written by the user comprised in the email writing area with the translation result comprises:
in response to the operation on the replacement button, popping up a first prompt box (1520), wherein the first prompt box comprises first prompt information and a first approval button (1521), and the first prompt information is used to prompt the user to determine whether to agree to replace the content written by the user with the translation result; and
in response to an operation on the first approval button, replacing the content written by the user comprised in the email writing area with the translation result.

3. The method according to any one of claims 1 to 2, wherein a language of the translation result is a language that is set for previous email translation.

4. The method according to any one of claims 1 to 2, wherein the first email translation area further comprises a setting bar (603), and the setting bar comprises a language button (701); and
in response to an operation of the user on the language button, adding a language setting bar (705) to the first email translation area, wherein the language setting bar comprises a source language setting button (704) and a target language setting button (705); and
the source language setting button is used to set a language of to-be-translated content, and the target language setting button is used to set a translated language of the to-be-translated content.

5. The method according to claim 4, wherein after the adding language setting bar to the first email translation area, the method further comprises:
in response to an operation of the user on the language button, hiding the language setting bar.

6. The method according to claim 4 or 5, wherein the setting bar further comprises at least one of the following buttons: a close button (602) and a pull-up button (601); and the following operations are performed:
in response to an operation of the user on the close button, closing the first email translation area;
in response to an operation of the user on the pull-up button, displaying the first email translation area in full screen, hiding the pull-up button, and displaying a pull-down button (604) in the setting bar; and
in response to an operation of the user on the pull-down button, exiting full screen display of the first email translation area, hiding the pull-down button, and displaying the pull-up button in the setting bar.

7. The method according to any one of claims 1 to 6, wherein the in response to a translation operation of the user on the content written by the user, adding a first email translation area to the first user interface comprises:
in response to the translation operation of the user on the content written by the user, popping up a second prompt box (1100), wherein the second prompt box comprises second prompt information and a second approval button (1101), and the second prompt information is used to prompt the user to determine whether to agree to upload the content written by the user to a cloud server for translation; and
in response to an operation of the user on the second approval button, adding the first email translation area to the first user interface.

8. The method according to any one of claims 1 to 7, wherein the method further comprises:
in response to an operation of the user for viewing an email in an inbox, displaying a second user interface, wherein the second user interface comprises an email preview area and the suspend button, and the email preview area comprises email body content; and
in response to an operation of the user on the suspend button, adding a second email translation area to the second user interface, wherein the second email translation area comprises a second result preview area, and the second result preview area comprises a translation result of the email body content.

9. The method according to claim 8, wherein the method further comprises:
when a language used for the email body content is different from a preset system language, in response to the operation of the user for viewing an email in the inbox, popping up a third prompt box, wherein the third prompt box comprises third prompt information, and the third prompt information is used to inform the user that the suspend button is used for translation.

10. An electronic device (2000), comprising:
a display (2030), configured to display a user interface;
a memory (2020), storing one or more computer programs; and
one or more processors (2010), configured to invoke the one or more computer programs stored in the memory, to perform the method according to any one of the claims 1 to 9.

11. A computer storage medium, wherein the computer storage medium stores one or more computer programs, and when the computer programs are executed by an electronic device, the method according to any one of claims 1 to 9 is implemented.

12. A computer program product, wherein when the computer program product runs on an electronic device, the electronic device is enabled to implement the method according to any one of claims 1 to 9.

## Patentansprüche

1. E-Mail-Übersetzungsverfahren, wobei das Verfahren Folgendes umfasst:
Anzeigen einer ersten Benutzeroberfläche (1500), wobei die erste Benutzeroberfläche einen E-Mail-Schreibbereich (1502) und eine Unterbrechen-Schaltfläche (1501) umfasst und der E-Mail-Schreibbereich durch einen Benutzer verfassten Inhalt umfasst;
als Reaktion auf einen Übersetzungsvorgang des Benutzers an dem verfassten Inhalt, Hinzufügen eines ersten E-Mail-Übersetzungsbereichs (1503) zu der ersten Benutzeroberfläche, wobei die Reaktion auf einen Übersetzungsvorgang des Benutzers an dem verfassten Inhalt Folgendes umfasst: als Reaktion auf einen Vorgang des Benutzers an der Unterbrechen-Schaltfläche umfasst der erste E-Mail-Übersetzungsbereich einen ersten Ergebnisvorschaubereich (1512) und eine Funktionsleiste (1513) und umfasst der erste Ergebnisvorschaubereich ein Übersetzungsergebnis des durch den Benutzer verfassten Inhalts, wobei der durch den Benutzer verfasste Inhalt Inhalt eines E-Mail-Textkörpers und einer E-Mail-Betreffzeile ist und die Funktionsleiste eine Ersetzen-Schaltfläche (1508) umfasst;
Empfangen (Schritt 1803), durch einen E-Mail-Client einer elektronischen Vorrichtung (100), des Vorgangs des Benutzers an der Unterbrechen-Schaltfläche; Bestimmen (Schritt 1804), durch den E-Mail-Client der elektronischen Vorrichtung, dass der E-Mail-Textkörper und/oder den E-Mail-Betreff zu übersetzen ist/sind;
als Reaktion auf einen Vorgang des Benutzers an der Ersetzen-Schaltfläche, Ersetzen des durch den Benutzer verfassten Inhalts, der in dem E-Mail-Schreibbereich umfasst ist, mit dem Übersetzungsergebnis und Anzeigen des Übersetzungsergebnisses in dem E-Mail-Schreibbereich; und
Ermöglichen, dass der Benutzer das Übersetzungsergebnis in dem E-Mail-Schreibbereich bearbeitet.

2. Verfahren nach Anspruch 1, wobei das Ersetzen des durch den Benutzer verfassten Inhalts, der in dem E-Mail-Schreibbereich umfasst ist, mit dem Übersetzungsergebnis als Reaktion auf einen Vorgang des Benutzers an der Ersetzen-Schaltfläche Folgendes umfasst:
als Reaktion auf den Vorgang an der Ersetzen-Schaltfläche, Einblenden eines ersten Aufforderungsfelds (1520), wobei das erste Aufforderungsfeld erste Aufforderungsinformationen und eine erste Bestätigen-Schaltfläche (1521) umfasst und die ersten Aufforderungsinformationen verwendet werden, um den Benutzer aufzufordern, zu bestimmen, ob einem Ersetzen des durch den Benutzer verfassten Inhalts mit dem Übersetzungsergebnis zuzustimmen ist; und
als Reaktion auf einen Vorgang an der ersten Bestätigen-Schaltfläche, Ersetzen des durch den Benutzer verfassten Inhalts, der in dem E-Mail-Schreibbereich umfasst ist, mit dem Übersetzungsergebnis.

3. Verfahren nach einem der Ansprüche 1 oder 2, wobei eine Sprache des Übersetzungsergebnisses eine Sprache ist, die für vorherige E-Mail-Übersetzung eingestellt ist.

4. Verfahren nach einem der Ansprüche 1 oder 2, wobei der erste E-Mail-Übersetzungsbereich ferner eine Einstellungsleiste (603) umfasst und die Einstellungsleiste eine Sprache-Schaltfläche (701) umfasst; und
als Reaktion auf einen Vorgang des Benutzers an der Sprache-Schaltfläche, Hinzufügen einer Spracheneinstellungsleiste (705) zu dem ersten E-Mail-Übersetzungsbereich, wobei die Spracheneinstellungsleiste eine Ausgangssprache-Einstellschaltfläche (704) und eine Zielsprache-Einstellschaltfläche (705) umfasst; und
die Ausgangssprache-Einstellschaltfläche verwendet wird, um eine Sprache von zu übersetzendem Inhalt einzustellen, und die Zielsprache-Einstellschaltfläche verwendet wird, um eine übersetzte Sprache des zu übersetzenden Inhalts einzustellen.

5. Verfahren nach Anspruch 4, wobei das Verfahren nach dem Hinzufügen der Spracheneinstellungsleiste zu dem ersten E-Mail-Übersetzungsbereich ferner Folgendes umfasst:
als Reaktion auf einen Vorgang des Benutzers an der Sprache-Schaltfläche, Ausblenden der Spracheneinstellungsleiste.

6. Verfahren nach Anspruch 4 oder 5, wobei die Einstellungsleiste ferner mindestens eine der folgenden Schaltflächen umfasst: eine Schließen-Schaltfläche (602) und eine Hochziehen-Schaltfläche (601); und wobei die folgenden Vorgänge durchgeführt werden:
als Reaktion auf einen Vorgang des Benutzers an der Schließen-Schaltfläche, Schließen des ersten E-Mail-Übersetzungsbereichs;
als Reaktion auf einen Vorgang des Benutzers an der Hochziehen-Schaltfläche, Anzeigen des ersten E-Mail-Übersetzungsbereichs im Vollbild, Ausblenden der Hochziehen-Schaltfläche und Anzeigen einer Herunterziehen-Schaltfläche (604) in der Einstellungsleiste; und
als Reaktion auf einen Vorgang des Benutzers an der Herunterziehen-Schaltfläche, Verlassen der Vollbildanzeige des ersten E-Mail-Übersetzungsbereichs, Ausblenden der Herunterziehen-Schaltfläche und Anzeigen der Hochziehen-Schaltfläche in der Einstellungsleiste.

7. Verfahren nach einem der Ansprüche 1 bis 6, wobei das Hinzufügen eines ersten E-Mail-Übersetzungsbereichs zu der ersten Benutzeroberfläche als Reaktion auf einen Übersetzungsvorgang des Benutzers an dem durch den Benutzer verfassten Inhalt Folgendes umfasst:
als Reaktion auf den Übersetzungsvorgang des Benutzers an dem durch den Benutzer verfassten Inhalt, Einblenden eines zweiten Aufforderungsfelds (1100), wobei das zweite Aufforderungsfeld zweite Aufforderungsinformationen und eine zweite Bestätigen-Schaltfläche (1101) umfasst und die zweiten Aufforderungsinformationen verwendet werden, um den Benutzer aufzufordern, zu bestimmen, ob einem Hochladen des durch den Benutzer verfassten Inhalts auf einen Cloudserver für Übersetzungen zuzustimmen ist; und
als Reaktion auf einen Vorgang des Benutzers an der zweiten Bestätigen-Schaltfläche, Hinzufügen des ersten E-Mail-Übersetzungsbereichs zu der ersten Benutzeroberfläche.

8. Verfahren nach einem der Ansprüche 1 bis 7, wobei das Verfahren ferner Folgendes umfasst:
als Reaktion auf einen Vorgang des Benutzers zum Betrachten einer E-Mail in einem Posteingang, Anzeigen einer zweiten Benutzeroberfläche, wobei die zweite Benutzeroberfläche einen E-Mail-Vorschaubereich und die Unterbrechen-Schaltfläche umfasst und der E-Mail-Vorschaubereich E-Mail-Textkörperinhalt umfasst; und
als Reaktion auf einen Vorgang des Benutzers an der Unterbrechen-Schaltfläche, Hinzufügen eines zweiten E-Mail-Übersetzungsbereichs zu der zweiten Benutzeroberfläche, wobei der zweite E-Mail-Übersetzungsbereich einen zweiten Ergebnisvorschaubereich umfasst und der zweite Ergebnisvorschaubereich ein Übersetzungsergebnis des E-Mail-Textkörperinhalts umfasst.

9. Verfahren nach Anspruch 8, wobei das Verfahren ferner Folgendes umfasst:
wenn eine Sprache, die für den E-Mail-Textkörperinhalt verwendet wird, sich von einer voreingestellten Systemsprache unterscheidet, Einblenden eines drittes Aufforderungsfelds als Reaktion auf den Vorgang des Benutzers zum Betrachten einer E-Mail in dem Posteingang, wobei das dritte Aufforderungsfeld dritte Aufforderungsinformationen umfasst und die dritten Aufforderungsinformationen verwendet werden, um den Benutzer darüber zu informieren, dass die Unterbrechen-Schaltfläche zur Übersetzung verwendet wird.

10. Elektronische Vorrichtung (2000), umfassend:
eine Anzeige (2030), die dazu konfiguriert ist, eine Benutzeroberfläche anzuzeigen;
einen Speicher (2020), der ein oder mehrere Computerprogramme speichert; und
einen oder mehrere Prozessoren (2010), die dazu konfiguriert sind, das eine oder die mehreren in dem Speicher gespeicherten Computerprogramme aufzurufen, um das Verfahren nach einem der Ansprüche 1 bis 9 durchzuführen.

11. Computerspeichermedium, wobei das Computerspeichermedium ein oder mehrere Computerprogramme speichert und, wenn die Computerprogramme durch eine elektronische Vorrichtung ausgeführt werden, das Verfahren nach einem der Ansprüche 1 bis 9 umgesetzt wird.

12. Computerprogrammprodukt, wobei, wenn das Computerprogrammprodukt auf einer elektronischen Vorrichtung ausgeführt wird, die elektronische Vorrichtung in die Lage versetzt wird, das Verfahren nach einem der Ansprüche 1 bis 9 umzusetzen.

## Revendications

1. Procédé de traduction de courriel, dans lequel le procédé comprend :
l'affichage d'une première interface utilisateur (1500), dans lequel la première interface utilisateur comprend une zone de rédaction de courriel (1502) et un bouton de suspension (1501), et la zone de rédaction de courriel comprend un contenu écrit par un utilisateur ;
en réponse à une opération de traduction de l'utilisateur sur le contenu écrit, l'ajout d'une première zone de traduction de courriel (1503) à la première interface utilisateur, dans lequel la réponse à une opération de traduction de l'utilisateur sur le contenu écrit comprend : en réponse à une opération de l'utilisateur sur le bouton de suspension, la première zone de traduction de courriel comprend une première zone d'aperçu de résultat (1512) et une barre de fonction (1513), la première zone d'aperçu de résultat comprend un résultat de traduction du contenu écrit par l'utilisateur, dans lequel le contenu écrit par l'utilisateur est le contenu d'un corps de courriel et d'un objet de courriel, la barre de fonction comprend un bouton de remplacement (1508) ;
la réception (étape 1803), par un client de courriel d'un dispositif électronique (100), de l'opération de l'utilisateur sur le bouton de suspension ; la détermination (étape 1804), par le client de courriel du dispositif électronique, de traduire le corps de courriel et/ou l'objet de courriel ;
en réponse à une opération de l'utilisateur sur le bouton de remplacement, le remplacement du contenu écrit par l'utilisateur compris dans la zone de rédaction de courriel par le résultat de traduction, et l'affichage du résultat de traduction dans la zone de rédaction de courriel ; et
le fait de permettre à l'utilisateur de modifier le résultat de traduction dans la zone de rédaction de courriel.

2. Procédé selon la revendication 1, dans lequel, en réponse à une opération de l'utilisateur sur le bouton de remplacement, le remplacement du contenu écrit par l'utilisateur dans la zone de rédaction de courriel par le résultat de traduction comprend :
en réponse à l'opération sur le bouton de remplacement, l'apparition d'une première boîte de dialogue (1520), dans lequel la première boîte de dialogue comprend des premières informations d'invite et un premier bouton d'approbation (1521), et les premières informations d'invite sont utilisées pour inviter l'utilisateur à déterminer s'il accepte de remplacer le contenu écrit par l'utilisateur par le résultat de traduction ; et
en réponse à une opération sur le premier bouton d'approbation, le remplacement du contenu écrit par l'utilisateur compris dans la zone de rédaction de courriel par le résultat de traduction.

3. Procédé selon l'une quelconque des revendications 1 et 2, dans lequel une langue du résultat de traduction est une langue qui est définie pour une traduction de courriel précédente.

4. Procédé selon l'une quelconque des revendications 1 et 2, dans lequel la première zone de traduction de courriel comprend en outre une barre de paramétrage (603), et la barre de paramétrage comprend un bouton de langue (701) ; et
en réponse à une opération de l'utilisateur sur le bouton de langue, l'ajout d'une barre de paramétrage de langue (705) à la première zone de traduction de courriel, dans lequel la barre de paramétrage de langue comprend un bouton de paramétrage de langue source (704) et un bouton de paramétrage de langue cible (705) ; et
le bouton de paramétrage de langue source est utilisé pour définir une langue de contenu à traduire, et le bouton de paramétrage de langue cible est utilisé pour définir une langue de traduction du contenu à traduire.

5. Procédé selon la revendication 4, dans lequel, après l'ajout de la barre de paramétrage de langue à la première zone de traduction de courriel, le procédé comprend en outre :
en réponse à une opération de l'utilisateur sur le bouton de langue, le masquage de la barre de paramétrage de langue.

6. Procédé selon la revendication 4 ou 5, dans lequel la barre de paramétrage comprend en outre au moins un des boutons suivants : un bouton de fermeture (602) et un bouton déroulant vers le haut (601) ; et les opérations suivantes sont réalisées :
en réponse à une opération de l'utilisateur sur le bouton de fermeture, la fermeture de la première zone de traduction de courriel ;
en réponse à une opération de l'utilisateur sur le bouton déroulant vers le haut, l'affichage de la première zone de traduction de courriel en plein écran, le masquage du bouton déroulant vers le haut et l'affichage d'un bouton déroulant vers le bas (604) dans la barre de paramétrage ; et
en réponse à une opération de l'utilisateur sur le bouton déroulant vers le bas, la sortie d'un affichage en plein écran de la première zone de traduction de courriel, le masquage du bouton déroulant vers le bas et l'affichage du bouton déroulant vers le haut dans la barre de paramétrage.

7. Procédé selon l'une quelconque des revendications 1 à 6, dans lequel, en réponse à une opération de traduction de l'utilisateur sur le contenu écrit par l'utilisateur, l'ajout d'une première zone de traduction de courriel à la première interface utilisateur comprend :
en réponse à l'opération de traduction de l'utilisateur sur le contenu rédigé par l'utilisateur, l'apparition d'une deuxième boîte de dialogue (1100), dans lequel la deuxième boîte de dialogue comprend des deuxièmes informations d'invite et un second bouton d'approbation (1101), et les deuxièmes informations d'invite sont utilisées pour inviter l'utilisateur à déterminer s'il accepte de télécharger le contenu écrit par l'utilisateur sur un serveur cloud pour traduction ; et
en réponse à une opération de l'utilisateur sur le second bouton d'approbation, l'ajout de la première zone de traduction de courriel à la première interface utilisateur.

8. Procédé selon l'une quelconque des revendications 1 à 7, dans lequel le procédé comprend en outre :
en réponse à une opération de l'utilisateur visant à consulter un courriel dans une boîte de réception, l'affichage d'une seconde interface utilisateur, dans lequel la seconde interface utilisateur comprend une zone d'aperçu de courriel et un bouton de suspension, et la zone d'aperçu de courriel comprend un contenu de corps de courriel ; et
en réponse à une opération de l'utilisateur sur le bouton de suspension, l'ajout d'une seconde zone de traduction de courriel à la seconde interface utilisateur, dans lequel la seconde zone de traduction de courriel comprend une seconde zone d'aperçu de résultat, et la seconde zone d'aperçu de résultat comprend un résultat de traduction du contenu de corps de courriel.

9. Procédé selon la revendication 8, dans lequel le procédé comprend en outre :
lorsqu'une langue utilisée pour le contenu de corps de courriel est différente d'une langue système prédéfinie, en réponse à l'opération de l'utilisateur visant à consulter un courriel dans la boîte de réception, l'apparition d'une troisième boîte de dialogue, dans lequel la troisième boîte de dialogue comprend des troisièmes informations d'invite, et les troisièmes informations d'invite sont utilisées pour informer l'utilisateur que le bouton de suspension est utilisé pour la traduction.

10. Dispositif électronique (2000), comprenant :
un affichage (2030), configuré pour afficher une interface utilisateur ;
une mémoire (2020), stockant un ou plusieurs programmes informatiques ; et
un ou plusieurs processeurs (2010), configurés pour invoquer les un ou plusieurs programmes informatiques stockés dans la mémoire, pour réaliser le procédé selon l'une quelconque des revendications 1 à 9.

11. Support de stockage informatique, dans lequel le support de stockage informatique stocke un ou plusieurs programmes informatiques, et lorsque les programmes informatiques sont exécutés par un dispositif électronique, le procédé selon l'une quelconque des revendications 1 à 9 est mis en œuvre.

12. Produit-programme informatique, dans lequel lorsque le produit-programme informatique s'exécute sur un dispositif électronique, le dispositif électronique est activé pour mettre en œuvre le procédé selon l'une quelconque des revendications 1 à 9.
